# EUROPÄISCHE PATENTSCHRIFT

(11) **EP 3 463 734 B1**
(45) Veröffentlichungstag und Bekanntmachung des Hinweises auf die Patenterteilung: **13.04.2022**
(21) Anmeldenummer: 17727139.2
(22) Anmeldetag: 22.05.2017
(51) Int. Cl.: B23K 7/00, B23K 26/08, B23K 26/38, B23K 26/70, B23K 37/02

(54) **MASCHINE ZUM TRENNENDEN BEARBEITEN EINES PLATTENFÖRMIGEN WERKSTÜCKS UND VERFAHREN ZUM AUSDRÜCKEN EINES FREIGETRENNTEN WERKSTÜCKTEILS**
MACHINE FOR CUTTING A PLANAR WORKPIECE AND METHOD FOR PRESSING OUT A WORKPIECE PART THAT HAS BEEN CUT FREE
MACHINE POUR SÉPARER PAR USINAGE UNE PIÈCE SOUS FORME DE PLAQUE ET PROCÉDÉ POUR ÉJECTER UNE PARTIE DE PIÈCE DÉGAGÉE PAR DÉCOUPE

(30) Priorität: 23.05.2016 DE 102016208872
(43) Veröffentlichungstag der Anmeldung: 10.04.2019
(73) Patentinhaber: Trumpf Werkzeugmaschinen GmbH + Co. KG, 71254 Ditzingen (DE)
(72) Erfinder: DEISS, Magnus, 70372 Stuttgart (DE); EPPERLEIN, Peter, 71229 Leonberg (DE); OTTNAD, Jens, 76199 Karlsruhe (DE); SCHMAUDER, Frank, 72555 Metzingen (DE); WOLF, Dennis, 71277 Rutesheim (DE)
(74) Vertreter: Kohler Schmid Möbus Patentanwälte
(86) Internationale Anmeldenummer: PCT/EP2017/062261
(87) Internationale Veröffentlichungsnummer: WO 2017/202767

(56) Entgegenhaltungen:
- DE-B4-102013 226 818
- JP-A- H04 231 192
- Alfred Böge ET AL: "Aufgabensammlung zur Statik, Dynamik Hydraulik und Festigkeitslehre" In: "Aufgabensammlung zur Statik, Dynamik Hydraulik und Festigkeitslehre", 31. Dezember 1965 (1965-12-31), XP055397607, ISBN: 978-3-663-07634-6 Seiten 50-51, Seiten 50,51

## Beschreibung

Die vorliegende Erfindung betrifft eine Maschine, insbesondere eine Laserbearbeitungsmaschine, zum trennenden Bearbeiten eines plattenförmigen Werkstücks, beispielsweise eines Blechs, insbesondere mittels eines Laserstrahls, und ein Verfahren zum Ausdrücken eines aus einem Werkstück freigetrennten Werkstückteils gemäß dem Oberbegriff der Ansprüche 1 und 12. Eine solche Maschine zum trennenden Bearbeiten eines plattenförmigen Werkstücks und ein solches Verfahren sind aus der DE 10 2013 226 818 B4 bekannt geworden. An einer derartigen Maschine mit hybrider Bewegungsführung, bei der das Werkstück in einer ersten Richtung (X-Richtung) und der Bearbeitungskopf in einer zweiten Richtung (Y-Richtung) bewegt werden, ist zur Vermeidung von Beschädigungen durch den Bearbeitungsstrahl (Laserstrahl) die Werkstückauflage im Verfahrbereich des Bearbeitungskopfs unterbrochen. In der Werkstückauflage erstreckt sich somit zwischen zwei Werkstückauflageflächen bzw. Werkstückauflagen ein Spalt in Y-Richtung. Durch diesen Spalt werden der durch das Werkstück hindurch getretene Bearbeitungsstrahl sowie anfallende Schlacke und Schneidbutzen abgeführt. Bei dem Bearbeitungsstrahl kann es sich um einen Laserstrahl handeln, aber auch die Verwendung einer anderen Art von Hochenergiestrahl, beispielsweise in Form eines Plasmalichtbogens, oder eines Wasserstrahls ist möglich.

Bei einer solchen Maschine zielen alle Bemühungen darauf ab, den für den Durchtritt des Bearbeitungsstrahls benötigten Spalt so klein wie möglich zu halten, um die bestmögliche Werkstück-Unterstützung zu gewährleisten. Umfasst eine solche Bearbeitungsmaschine eine Zusatzachse zur Bewegung des Bearbeitungskopfs in X-Richtung, ist es jedoch erforderlich, dass der Spalt eine Mindestbreite aufweist, die zumindest dem Bewegungsbereich des Bearbeitungskopfs in X-Richtung entspricht. Bei einer solchen Maschine können von einem Rest-Werkstück (Restgitter) freigeschnittene bzw. freigetrennte Werkstückteile, die ausreichend klein sind, nach unten durch den Spalt ausgeschleust werden.

In der DE 10 2013 226 818 B4 wird vorgeschlagen, innerhalb des Spalts mindestens zwei in der zweiten Richtung unabhängig voneinander verfahrbare Unterstützungsschlitten anzuordnen, die jeweils eine Auflagefläche zur Unterstützung von beim trennenden Bearbeiten geschnittenen Werkstückteilen aufweisen. Zum Ausschleusen des freigeschnittenen Werkstückteils können die Auflageflächen der Unterstützungsschlitten oder die Unterstützungsschlitten selbst unter eine Werkstück-Auflageebene abgesenkt werden. Die abgesenkten Auflageflächen bzw. die Unterstützungsschlitten können mit dem auf den Auflageflächen aufliegenden Werkstückteil an eine Ausschleusposition innerhalb des Spalts verfahren werden. Zum Ausschleusen des Werkstückteils an der Ausschleusposition kann ein Abstand zwischen den beiden Unterstützungsschlitten vergrößert werden, so dass das Werkstückteil zwischen den beiden Unterstützungsschlitten nach unten fällt. Bei diesem Verfahren kann es jedoch zum Verkanten oder Verhaken des freigeschnittenen Werkstückteils (Gutteil) und dem Rest-Werkstück (Restgitter) kommen, von dem das Werkstückteil freigeschnitten wurde.

Aus der JPH04231192 A ist eine Laserbearbeitungsmaschine bekannt geworden, bei der zum Entfernen eines freigeschnittenen Werkstückteils aus dem Restgitter der Laserbearbeitungskopf abgesenkt wird, so dass dessen dem Werkstück zugewandtes Ende mit dem freigeschnittenen Werkstückteil kollidiert, um dieses aus dem Restgitter nach unten auszudrücken. Auch ein stabartiges Werkzeug, welches neben dem Bearbeitungskopf angeordnet ist, kann auf das Werkstück abgesenkt werden, um das freigeschnittene Werkstückteil aus dem Restgitter auszudrücken.

In der DE 36 37 204 A1 ist eine Revolverschneidpresse beschrieben, die eine Laserstation zum Herausschneiden von Teilen aus einem Werkstück aufweist und die mit einer am Grundgestell der Schneidpresse befestigten Ausdrückeinrichtung zusammenwirkt. Die Ausdrückeinrichtung besteht im Wesentlichen aus einer Ausdrückerplatte, die vertikal absenkbar und in den Zwischenraum zwischen dem Laserkopf und einem Laserschacht einschwenkbar ist. Der Ausdrückvorgang erfolgt, indem die Ausdrückerplatte auf das Werkstück aufgesetzt wird, um das Teil nach unten aus dem (Rest-)Werkstück herauszudrücken. Beim Herausdrücken wird der Laserschacht abgesenkt, so dass das Teil aus der Ebene des Werkstücks entfernt und aus dem Arbeitsbereich der Schneidpresse entfernt werden kann, ohne dass zu diesem Zweck das Werkstück aus dem Arbeitsbereich heraus bewegt werden muss.

In der US 2015/0027999 A1 ist eine kombinierte maschinelle Bearbeitungsvorrichtung zum Bilden eines Loches in einem plattenförmigen Werkstück durch thermisches Schneiden mittels eines ersten Kopfs und maschinelles Bearbeiten mittels eines zweiten Kopfs beschrieben, wobei die Köpfe in der horizontalen und der vertikalen Richtung relativ zu einem Auflagetisch für das Werkstück bewegbar sind. Der zweite Kopf kann ein Schneidwerkzeug zur Durchführung eines Endbearbeitungsvorgangs an dem Loch aufweisen, das in einem vorausgehenden Lochschneidevorgang durch thermisches Bearbeiten mit dem ersten Kopf erzeugt wurde. Zwischen dem Lochschneidevorgang und dem Endbearbeitungsvorgang kann das bei dem Endbearbeitungsvorgang verwendete Schneidwerkzeug in das Loch eingeführt werden, um nachzuprüfen, ob in dem Loch thermisch geschnittenes Material zurückgeblieben ist oder nicht.

In der JPH082670 A ist eine Trennvorrichtung zum Trennen von Werkstückteilen von einem Restgitter beschrieben, bei der eine Mehrzahl von Ausdrückelementen gegen die Oberseiten von freigeschnittenen Werkstückteilen angedrückt wird. Die Werkstückteile werden zur Trennung eines Werkstückteils vom Restgitter abgesenkt, wobei zur Beibehaltung einer horizontalen Ausrichtung die Ausdrückelemente beim Absenken gegen die Werkstückteile angedrückt sind.

### Aufgabe der Erfindung

Der vorliegenden Erfindung stellt sich die Aufgabe, eine Maschine zur trennenden Bearbeitung eines plattenförmigen Werkstücks, insbesondere eine Laserbearbeitungsmaschine, und ein Verfahren zum Ausdrücken eines aus einem Werkstück freigetrennten Werkstückteils bereitzustellen, die eine verbesserte Prozesssicherheit beim Ausschleusen von Werkstückteilen aufweist.

### Gegenstand der Erfindung

Eine Maschine zur trennenden Bearbeitung eines plattenförmigen Werkstück gemäß der Erfindung ist im Anspruch 1 definiert.

Um die Entnahme kleiner Werkstückteile, die durch den Spalt ausgeschleust werden, aus dem Restgitter prozesssicherer zu gestalten, wird vorgeschlagen, eine Ausdrückeinrichtung zur verwenden, die ein Ausdrückelement aufweist, das an einer vorgegebenen Ausdrückposition innerhalb des Spalts gegen die Oberseite des freigetrennten Werkstückteils angedrückt wird, um das Werkstückteil aus der Werkstück-Auflageebene, die von den Werkstückauflageflächen gebildet wird, nach unten auszudrücken. Die Ausdrückeinrichtung verhindert auf diese Weise ein Verkippen des Werkstückteils aufgrund von Reibungskräften und die damit verbundene Gefahr des Verkantens des Werkstückteils am Restgitter, die mit zunehmender Dicke des Werkstücks (Blechs) stark zunimmt. Bei der Maschine kann es sich um eine Maschine zum mechanischen Trennen des Werkstücks handeln, beispielsweise um eine Stanzmaschine oder eine Stanz-Laser-Kombinationsmachine. Die Maschine kann zum trennenden Bearbeiten mittels eines Hochenergiestrahls ausgebildet sein, insbesondere mittels eines Laserstrahls, der durch den Bearbeitungskopf auf das Werkstück ausgerichtet wird. An Stelle eines Laserstrahls kann es sich bei dem Hochenergiestrahl beispielsweise um einen Plasmalichtbogen handeln.

Unter einer Werkstückauflagefläche wird im Sinne dieser Anmeldung eine Werkstückauflage verstanden, die geeignet ist, das plattenförmige Werkstück flächig zu unterstützen. Eine solche Werkstückauflagefläche muss keine durchgehende Fläche bilden, es genügt vielmehr, wenn das Werkstück an mehreren (mindestens drei, in der Regel deutlich mehr) Stellen durch Auflageelemente (ggf. nur punktuell) unterstützt wird, um das Werkstück in einer Auflageebene zu lagern. Die Werkstückauflagefläche wird in diesem Fall von den Oberseiten der Auflageelemente gebildet. Die fest stehenden Werkstückauflageflächen, zwischen denen der Spalt gebildet ist, können beispielsweise in Form eines Bürsten- oder Kugeltisches ausgebildet sein. Das zu bearbeitende Werkstück wird in diesem Fall während der Bearbeitung durch viele auf bzw. in einer Tischfläche angeordnete Auflageelemente in Form von Bürsten oder (drehbaren) Kugeln gestützt, die zusammen die Werkstückauflagefläche bilden. Alternativ können drehbare Rollen als Auflageelemente zur Bildung von Werkstückauflageflächen vorgesehen sein. Außerdem ist es möglich, die Werkstückauflageflächen als umlaufende Auflagebänder zu gestalten.

Das Ausdrückelement der Ausdrückeinrichtung weist typischer Weise eine vergleichsweise kleine Andrückfläche auf, mit der dieses gegen das freigeschnittene Werkstückteil angedrückt wird, wobei an der Ausdrückposition der Flächenschwerpunkt bzw. der Mittelpunkt der Andrückfläche des Ausdrückelements positioniert wird. Um die Ausdrückposition in dem Spalt praktisch beliebig vorgeben zu können, ist das Ausdrückelement - ggf. gemeinsam mit der Ausdrückeinrichtung - bevorzugt sowohl in der ersten Richtung (X) als auch in der zweiten Richtung (Y) innerhalb des Spalts bewegbar.

In einer besonders vorteilhaften Ausführungsform weist die Maschine eine dritte Bewegungseinrichtung zur Bewegung des Bearbeitungskopfs in der ersten Richtung (X) innerhalb des Spalts auf und das Ausdrückelement ist mittels der zweiten und dritten Bewegungseinrichtung, welche zur Bewegung des Bearbeitungskopfs in dem Spalt dienen, in dem Spalt (gesteuert) bewegbar. Auf diese Weise kann das Ausdrückelement an einer vorgegebenen Ausdrückposition innerhalb des Spalts positioniert werden, ohne dass zu diesem Zweck das Werkstück bewegt werden muss.

Die Ausdrückeinrichtung kann an dem Bearbeitungskopf befestigt, beispielsweise seitlich an dem Bearbeitungskopf angebracht sein. Auf diese Weise kann durch die Bewegung des Bearbeitungskopfs die Ausdrückeinrichtung in der ersten und in der zweiten Richtung in dem Spalt positioniert werden. Die Ausdrückeinrichtung ist daher typischer Weise in dem Bewegungsbereich des Bearbeitungskopfs, der ggf. in Y-Richtung über die Erstreckung des Spalts hinaus reicht, frei positionierbar. Die Ausdrückeinrichtung und damit das Ausdrückelement ist dann sowohl entlang des Spalts (in Y-Richtung) über den gesamten Arbeitsbereich als auch quer zum Spalt (in X-Richtung) in dem Bewegungsbereich der durch die dritte Bewegungseinrichtung gebildeten Zusatzachse positionierbar, der z.B. bei ca. +/- 50 mm liegen kann.

Bei einer weiteren Ausführungsform ist die Ausdrückeinrichtung ausgebildet, das Ausdrückelement zwischen einer ersten, zurückgezogenen Stellung, in der das Ausdrückelement nicht über eine dem Werkstück zugewandtes Ende des Bearbeitungskopfs übersteht, und einer zweiten, ausgefahrenen Stellung zu bewegen, in der das Ausdrückelement über das dem Werkstück zugewandte Ende des Bearbeitungskopfs übersteht. In der ersten, eingefahrenen Stellung kann das Ausdrückelement während des Trennprozesses mit dem Bearbeitungskopf mitbewegt werden, ohne hierbei die Oberfläche des Werkstücks zu berühren. In der zweiten, ausgefahrenen Stellung steht das Ausdrückelement über ein dem Werkstück zugewandtes Ende des Bearbeitungskopfs, beispielsweise über eine Düsenkante einer dort angebrachten Bearbeitungsdüse, nach unten vor, um das Ausdrücken des freigetrennten Werkstückteils zu ermöglichen.

Üblicherweise umfasst die Maschine zusätzlich eine vierte Bewegungseinrichtung zur Bewegung des Bearbeitungskopfs in einer dritten Richtung, und zwar der Schwerkraftrichtung, die senkrecht zur ersten und zweiten Richtung ausgerichtet ist. Die Bewegung des Bearbeitungskopfs in der dritten Richtung dient dazu, den Abstand zwischen dem Werkstück und dem Bearbeitungskopf in der dritten Richtung einzustellen. Ist die Ausdrückeinrichtung an dem Bearbeitungskopf befestigt, kann diese gemeinsam mit dem Bearbeitungskopf in der dritten Richtung mitbewegt werden und ist somit in der Höhe verfahrbar.

Im Sinne dieser Anmeldung wird unter einer Bewegung, die von einer jeweiligen Bewegungseinrichtung in einer zugehörigen Richtung ermöglicht wird, eine bidirektionale Bewegung (Hin-und-Her-Bewegung) verstanden, d.h. sowohl eine Bewegung in positiver als auch in negativer Richtung. Beispielsweise sind die erste und dritte Bewegungseinrichtung zur bidirektionalen Bewegung des Werkstücks bzw. des Bearbeitungskopfs in der ersten Richtung (X-Richtung) ausgebildet, d.h. zur Bewegung des Werkstücks bzw. des Bearbeitungskopfs sowohl in positiver als auch in negativer X-Richtung. Entsprechend ist auch die zweite Bewegungseinrichtung zur bidirektionalen Bewegung des Bearbeitungskopfs in der zweiten, insbesondere zur ersten senkrechten Richtung (Y-Richtung) ausgebildet, d.h. zur Bewegung des Bearbeitungskopfs sowohl in positiver als auch in negativer Y-Richtung. Gleiches gilt für die vierte Bewegungseinrichtung, die ausgebildet ist, den Bearbeitungskopf in der dritten Richtung (Z-Richtung) bzw. in Schwerkraftrichtung bidirektional zu bewegen.

Bei einer weiteren Ausführungsform ist das Ausdrückelement in der zweiten Stellung zustellbar oder das Ausdrückelement ist federnd gelagert. Grundsätzlich bestehen zwei Möglichkeiten, um das Ausdrückelement gegen das Werkstück anzudrücken: Entweder ist das Ausdrückelement in der zweiten Stellung zustellbar bzw. arretierbar, so dass dieses beim Andrücken gegen das Werkstück nicht aus der zweiten Stellung heraus gedrückt wird, oder das Ausdrückelement ist federnd gelagert, so dass dieses beim Andrücken gegen das Werkstückteil aus der zweiten Stellung gegen die Wirkung einer Federkraft in Richtung auf die erste, zurückgezogene Stellung zu bewegt wird.

Die Ausdrückeinrichtung kann als Ausdrückzylinder ausgebildet sein, dessen Kolbenstange das Ausdrückelement bildet. In diesem Fall kann die Kolbenstange z.B. motorisch oder pneumatisch zwischen den beiden Stellungen bewegt werden, bei denen es sich typischer Weise um die beiden Endstellungen der Bewegung der Kolbenstange handelt. Das Ausdrückelement in Form der Kolbenstange wird in der zweiten, ausgefahrenen Stellung gegen das Werkstück bzw. gegen dessen Oberseite angedrückt. Wird die Kolbenstange motorisch angetrieben, so ist diese in der Regel starr gelagert, d.h. diese verbleibt beim Andrücken gegen das Werkstück in der zweiten Stellung. Alternativ kann die Kolbenstange beim Andrücken gegen das Werkstück gegen die Wirkung einer Federkraft ausgelenkt werden.

Bevorzugt ist der Ausdrückzylinder pneumatisch betrieben. In diesem Fall wird typischer Weise durch die Kompressibilität des für die Bewegung der Kolbenstange verwendeten Gases, z.B. Druckluft, eine (pneumatische) Federung bewirkt, d.h. die Kolbenstange wird in der zweiten, ausgefahrenen Stellung nach dem Aufsetzen auf das Werkstück eingedrückt, so dass die Kolbenstange die zweite, vollständig ausgefahrene Stellung verlässt, aber dennoch eine Kraft auf das freigeschnittene Werkstückteil ausübt.

Bei einer Ausführungsform umfasst die Maschine mindestens einen innerhalb des Spalts in der zweiten Richtung verfahrbaren Unterstützungsschlitten, der eine Auflagefläche zur Unterstützung von beim trennenden Bearbeiten geschnittenen Werkstückteilen aufweist, wobei der Unterstützungsschlitten und/oder die Auflagefläche relativ zum Unterstützungsschlitten (in der dritten Richtung) unter eine durch die Werkstückauflageflächen gebildete Werkstück-Auflageebene absenkbar ist/sind. Wie in der eingangs genannten DE 10 2013 226 818 B4 beschrieben ist, die durch Bezugnahme zum Inhalt dieser Anmeldung gemacht wird, kann durch das gesteuerte Absenken der Auflagefläche(n) bzw. des/der Unterstützungsschlitten gemeinsam mit den Auflageflächen ein auf der bzw. auf den Auflagefläche(n) aufliegendes Werkstückteil idealer Weise ohne Verkanten aus dem Restwerkstück gelöst werden.

Im vorliegenden Fall kann durch das flexibel positionierbare Ausdrückelement in Verbindung mit einer harten und steifen Konstruktion der Unterstützungsschlitten, genauer gesagt von deren Auflageflächen, erreicht werden, dass beim Ausdrückvorgang, bei dem die Auflageflächen bzw. die Unterstützungsschlitten nach unten bewegt werden, durch eine Vorspannung bzw. einen Druck des Ausdrückelements von oben das freigetrennte Werkstückteil gegen die Auflagefläche angedrückt und in einer waagerechten Lage fixiert wird. Diese Fixierung wird während des gesamten Absenkvorgangs aufrechterhalten, was es ermöglicht, auftretende Reibungskräfte am Umfang des freigetrennten Werkstückteils zu überwinden, ohne dass das Werkstückteil verkippt oder am Rest-Werkstück verhakt.

Zu diesem Zweck weist die Auflagefläche des Unterstützungsschlittens einen (Teil-)Bereich auf, der eine starre Auflage bildet, und der Unterstützungsschlitten und das Ausdrückelement sind relativ zueinander derart positionierbar, dass die Ausdrückposition in dem Bereich des Unterstützungsschlittens mit der starren Auflage anordenbar ist. Der Bereich der Auflagefläche, der die starre Auflage bildet, kann beispielsweise ein druckfestes Material, z.B. eine starre bzw. harte Oberfläche aus Kupfer, aufweisen, welche ein Gegenlager gegen die Wirkung des Ausdrückelements bildet. Es versteht sich, dass die Auflagefläche des Unterstützungsschlittens zusätzlich zum starren (Teil-)Bereich einen weiteren Teilbereich aufweisen kann (aber nicht muss), der eine elastische bzw. beim Aufbringen einer Kraft deformierbare Auflage bildet, beispielsweise in der Art einer Bürstenauflage, welche das aufliegende Werkstück bzw. Werkstückteil kratzerfrei unterstützt. Alternativ kann die Auflagefläche nur aus dem Bereich bestehen, der die starre Auflage bildet.

Ist das Ausdrückelement in der zweiten Stellung arretiert, wird dieses auf die Oberseite des freigetrennten Werkstückteils aufgesetzt und gegen das Werkstückteil angedrückt, so dass dieses zwischen dem Ausdrückelement und dem Bereich der Auflagefläche, der die starre Auflage bildet, in der Art einer Schraubzwinge eingespannt wird. Ist das Ausdrückelement in der zweiten Stellung federnd gelagert, wird das Ausdrückelement ebenfalls auf die Oberseite des freigetrennten Werkstückteils aufgesetzt und gegen die Wirkung der Federkraft aus der zweiten Stellung in Richtung auf die erste Stellung bewegt, bis eine ausreichende mechanische Spannung zwischen dem Ausdrückelement und dem Bereich vorhanden ist, der die starre Auflage der Auflagefläche bildet, so dass das Werkstückteil auch in diesem Fall gegen die Oberfläche der Auflagefläche des Unterstützungsschlittens verspannt wird. Anschließend werden die Unterstützungsschlitten unter Beibehalten des Drucks bzw. der Vorspannung abgesenkt. Hierdurch kann die Fixierung des Werkstückteils während der gesamten Absenkbewegung aufrechterhalten werden. Es ist alternativ auch möglich, die Ausdrückeinrichtung um eine gewisse Weglänge ebenfalls (vorzugsweise synchron) abzusenken, damit die Vorspannung erhalten bleibt.

Bei einer Weiterbildung entspricht eine Erstreckung des die starre Auflage bildenden Bereichs in der ersten Richtung der Erstreckung eines Bewegungsbereichs des Bearbeitungskopfs in der ersten Richtung. Auf diese Weise ist sichergestellt, dass das Ausdrückelement an jeder beliebigen Ausdrückposition stets über dem die starre Auflage bildenden Bereich der Auflagefläche angeordnet werden kann. Es versteht sich, dass die Ausdrückposition gegebenenfalls, d.h. bei einem ausreichend biegesteifen Werkstückteil, auch zwischen zwei Unterstützungsschlitten gewählt werden kann, sofern das Werkstückteil beim Ausdrücken auf den Auflageflächen beider Unterstützungsschlitten aufliegt und von beiden Auflageflächen unterstützt wird.

Bei einer Weiterbildung weist die Maschine zwei innerhalb des Spalts verfahrbare Unterstützungsschlitten auf, deren Auflageflächen an ihren einander zugewandten Kanten jeweils einen Bereich aufweisen, der die starre Auflage bildet. Dies ermöglicht es, eine Ausdrückposition zu wählen, welche zwischen den beiden Unterstützungsschlitten liegt, da in diesem Fall die beiden an den einander zugewandten Kanten gebildeten (Teil-)Bereiche ein Gegenlager für das Ausdrückelement bilden. So wird die Flexibilität bei der Wahl der Ausdrückposition erhöht und das Ausdrücken größerer Werkstückteile ermöglicht.

Bei einer Weiterbildung sind die Kanten der Auflageflächen unter einem Winkel zur ersten und zur zweiten Richtung ausgerichtet. Es hat sich gezeigt, dass ein Großteil der auf einer Maschine zum schneidenden Bearbeiten von plattenförmigen Werkstücken, beispielsweise einer Laserflachbettmaschine, gefertigten Werkstückteile ungefähr rechtwinklige Außenmaße sowie eine ungefähre Ausrichtung ihrer Innenkonturen im 0°- oder 90°-Winkel zu den jeweiligen Außenkanten des rechteckigen oder quadratischen plattenförmigen Werkstücks aufweisen. Sind die beiden Kanten der Auflageflächen unter einem (von 90° verschiedenen) Winkel zur ersten bzw. zur zweiten Richtung ausgerichtet, so ermöglicht dies eine bessere Unterstützung von Werkstückteilen, die beispielsweise lange zungenartige Abschnitte in der ersten Richtung aufweisen. Die einander zugewandten Kanten der Auflageflächen der beiden Unterstützungsschlitten können beispielsweise unter einem Winkel zwischen 20° und 40° zur ersten Richtung verlaufen. Die starren Bereiche, die sich an die unter einem Winkel ausgerichteten Kanten anschließen, können streifenförmig ausgebildet sein. Die Außenkontur der streifenförmigen Bereiche kann - mit Ausnahme des Abschnitts, der die Kante bildet
- insbesondere parallel zur ersten Richtung bzw. parallel zur zweiten Richtung verlaufen.

Bei einer weiteren Ausführungsform weist die Ausdrückeinrichtung mindestens einen Sensor zur Detektion des Erreichens der zweiten, ausgefahrenen Stellung durch das Ausdrückelement und/oder zur Detektion eines Kontakts des Ausdrückelements mit der Oberfläche des freigetrennten Werkstückteils auf. Das Ausdrückelement bzw. die Ausdrückeinrichtung kann auf diese Weise vorteilhaft zusätzlich als Sensor zur Kontrolle verwendet werden, ob das Werkstückteil tatsächlich ausgeschleust wurde. Zu diesem Zweck kann bei einem in der zweiten Stellung zugestellten Ausdrückelement ein Abreißen des Kontakts zwischen dem Ausdrückelement und der Oberfläche des freigetrennten Werkstückteils detektiert werden. Alternativ kann bei in der zweiten Stellung federnd gelagertem Ausdrückelement zu diesem Zweck das Erreichen oder das Verlassen der zweiten Stellung detektiert werden, wie weiter unten näher beschrieben wird.

Sofern die weiter oben beschriebenen Unterstützungsschlitten vorhanden sind, dient die Steuerungseinrichtung auch zum gesteuerten Verfahren der Unterstützungsschlitten in dem Spalt. Die Positionierung der Unterstützungsschlitten kann synchron mit der Bewegung des Bearbeitungskopfs in der zweiten Richtung (Y-Richtung) erfolgen. Die Bewegung der Unterstützungsschlitten kann aber auch unabhängig von der Bewegung des Bearbeitungskopfs in Y-Richtung erfolgen. Auf diese Weise können die Unterstützungsschlitten, falls diese z.B. beim Schneiden großer Werkstückteile nicht benötigt werden, von der Bearbeitungsposition, an welcher der Bearbeitungsstrahl positioniert ist, beabstandet angeordnet werden und beispielsweise in eine Parkposition außerhalb des Bewegungsbereichs des Bearbeitungskopfs verbracht werden. Werden die Unterstützungsschlitten zur Unterstützung von kippgefährdeten Werkstückteilen benötigt, können diese aneinander angrenzend benachbart zur Bearbeitungsposition angeordnet werden.

Gemäß der Erfindung eine Steuerungseinrichtung ausgebildet, bei einem freigetrennten Werkstückteil, bei dem der Flächenschwerpunkt der von der Außenkontur des freigetrennten Werkstückteils umgebenen Fläche oder der Massenschwerpunkt vom Linienschwerpunkt des freigetrennten Werkstückteils, genauer gesagt dem Linienschwerpunkt der Außenkontur des freigetrennten Werkstückteils, abweicht, eine Ausdrückposition vorzugeben, die vom Flächenschwerpunkt oder vom Massenschwerpunkt des freigetrennten Werkstückteils in Richtung auf dessen Linienschwerpunkt versetzt ist. Bei plattenförmigen Werkstücken, die aus einem in der Regel metallischen Material mit konstanter Dicke ohne Innenkonturen (Löchern bzw. Öffnungen) gebildet sind, entspricht der Flächenschwerpunkt der von der Außenkontur des freigetrennten Werkstückteils umgebenen Fläche dem Massenschwerpunkt des Werkstückteils. Bei einem freigetrennten Werkstückteil, das Innenkonturen bzw. Löcher aufweist, weicht der Flächenschwerpunkt der von der Außenkontur umgebenen Fläche typischer Weise vom Massenschwerpunkt ab, da die von der Außenkontur umgebene Fläche auch die von den Innenkonturen bzw. den Löchern in dem freigetrennten Werkstückteil gebildete Fläche umfasst. Unter dem Flächenschwerpunkt der von der Außenkontur umgebenen Fläche bzw. dem Flächenschwerpunkt allgemein wird in der vorliegenden Anmeldung derjenige Flächenschwerpunkt verstanden, bei dessen Berechnung ggf. vorhandene Innenkonturen des Werkstückteils nicht mit berücksichtigt werden, d.h. der Flächenschwerpunkt wird so berechnet, als ob die Innenkonturen nicht vorhanden wären, da die Innenkonturen für die Problematik, ob das Werkstückteil mit seiner Außenkontur am Restwerkstück verhakt, in der Regel keine Rolle spielen.

Der Linienschwerpunkt kann bei Werkstückteilen mit einfachen Außenkonturen mit dem Massenschwerpunkt zusammen fallen, bei komplexen und asymmetrischen Werkstückteilen verschiebt sich die Position des Linienschwerpunkts typischer Weise hin zu den kritischen, komplexen Teilkonturen. Wie weiter oben beschrieben wurde, ist es zielführend, nahe an potenziellen Problemstellen gegen das Werkstückteil zu drücken, da auf diese Weise die Krafteinwirkung bzw. der Hebelarm verbessert wird. Entsprechend wirkt das Ausdrückelement bei Werkstückteilen mit Außenkonturen mit komplexen Teilbereichen vorzugsweise an einer Ausdrückposition auf das Werkstückteil ein, die näher an dem komplexen Teilbereich liegt als der Massenschwerpunkt des Werkstückteils. Daher wird typischer Weise die Ausdrückposition in dem Teilbereich des Werkstückteils zwischen dem - ohne Berücksichtigung von Innenkonturen - berechneten Flächenschwerpunkt oder dem Massenschwerpunkt und der Außenkontur gewählt, in dem sich auch der Linienschwerpunkt befindet. Wenn kritische Teilbereiche an verschiedenen Stellen der Außenkontur der Werkstückteils vorhanden sind, stellt der Linienschwerpunkt einen Kompromiss für die geeignetste Ausdrückposition dar.

Die Ausdrückposition kann insbesondere mit dem Linienschwerpunkt des Werkstückteils übereinstimmen, sofern dort Werkstückmaterial vorhanden ist, gegen das das Ausdrückelement andrücken kann. Ist dies nicht der Fall, kann die Ausdrückposition an die nächstgelegene Position versetzt werden, an dem sich tatsächlich Werkstück-Material befindet. Der Linienschwerpunkt, der Massenschwerpunkt und der Flächenschwerpunkt des freigetrennten Werkstückteils können in der Steuerungseinrichtung bestimmt bzw. berechnet werden, es ist aber auch möglich, dass die Daten über den Linienschwerpunkt, den Massenschwerpunkt bzw. den Flächenschwerpunkt der Steuerungseinrichtung gemeinsam mit den Konturdaten des Werkstückteils von außen zur Verfügung gestellt werden, so dass auf eine solche Berechnung in der Maschine selbst verzichtet werden kann.

Bei einer weiteren Ausführungsform ist die Steuerungseinrichtung ausgebildet, das Ausdrückelement und die Unterstützungsschlitten für das Ausdrücken eines freigetrennten Werkstückteils derart relativ zueinander zu positionieren, dass entweder die Auflagefläche eines der beiden Unterstützungsschlitten, genauer gesagt zumindest ein Bereich der Auflagefläche, der eine starre Auflage bildet, an der Ausdrückposition angeordnet ist, oder die vorgegebene Ausdrückposition zwischen den beiden Unterstützungsschlitten und insbesondere zwischen den eine starre Auflage bildenden Bereichen der Unterstützungsschlitten liegt.

Es versteht sich, dass im zweiten Fall das Werkstückteil von den Auflageflächen beider Unterstützungsschlitten unterstützt wird. In diesem Fall ist das Werkstückteil typischer Weise biegesteif. Insbesondere wenn die Ausdrückposition zwischen den beiden Unterstützungsschlitten gewählt wird, ist darauf zu achten, dass es beim Andrücken des Ausdrückelements gegen das Werkstückteil nicht zu einer Verkippung des Werkstückteils kommt.

Die Ausdrückposition wird daher vorzugsweise an einem Punkt gewählt, der innerhalb des Auflagevielecks liegt, das durch die auf den Auflageflächen aufliegende Außenkontur des Werkstücks gebildet ist. Dann befindet sich die Ausdrückposition innerhalb der konvexen Hülle der auf den Auflageflächen bzw. auf deren harten bzw. starren Bereichen aufliegenden Teilflächen des Werkstückteils und ein Kippen des Werkstückteils beim Ausdrücken wird vermieden. Insbesondere bei komplexen Werkstückteilen mit vielen oder großen innenliegenden Öffnungen muss ggf. der Abstand der Unterstützungsschlitten optimiert werden, damit sich die konvexe Hülle der auf den Unterstützungsschlitten bzw. den harten Bereichen aufliegenden Werkstückteilflächen ändert und eine geeignete Ausdrückposition innerhalb der konvexen Hülle gefunden werden kann. Die konvexe Hülle des Werkstückteils ist hierbei wie allgemein in der Mathematik üblich definiert.

Ein verfahren zum Ausdrücken eines aus einem Werkstück freigetrennten Werkstückteils gemäß der Erfindung ist im Anspruch 12 definiert.

Bei diesem Verfahren wird die Ausdrückposition also in Abhängigkeit von einer Geometrie, insbesondere von einer Außenkontur, des freigetrennten Werkstückteils vorgegeben. Wie weiter oben beschrieben wurde, ist eine optimale Ausdrückposition in der Regel in der Nähe einer potentiellen Problemstelle bzw. in der Nähe der komplexesten Stelle der Außenkontur, günstig. Daher wird die Ausdrückposition in dem Teilbereich des Werkstückteils zwischen dem - ohne Berücksichtigung von Innenkonturen berechneten - Flächenschwerpunkt oder dem Massenschwerpunkt und der Außenkontur gewählt, in dem sich der Linienschwerpunkt befindet. Eine Ausdrückposition abweichend vom Linienschwerpunkt wird insbesondere dann vorgegeben, wenn sich an der Stelle des Linienschwerpunkts kein Werkstückmaterial, sondern eine Öffnung befindet.

Bei einer weiteren Variante wird die Ausschleusposition innerhalb einer konvexen Hülle derjenigen Teilflächen des Werkstückteils vorgegeben, die auf Auflageflächen, insbesondere auf eine starre Auflage bildenden Bereichen der Auflageflächen, aufliegen, wobei die Auflageflächen absenkbar sind und das Werkstückteil gegen die Wirkung des Ausdrückelements stützen. Wie weiter oben beschrieben wurde, kann ein Kippen des Werkstückteils beim Ausdrücken vermieden werden, wenn sich die Ausdrückposition innerhalb der konvexen Hülle der auf den Auflageflächen bzw. auf deren harten bzw. starren Bereichen aufliegenden Teilflächen des Werkstückteils befindet.

Wie weiter oben beschrieben wurde, kann das Ausdrückelement starr oder federnd gelagert sein, wobei im zweiten Fall eine Vorspannung aufgebaut werden kann, wenn das Werkstückteil von unten, beispielsweise durch einen Unterstützungsschlitten, gestützt ist, um das Werkstückteil beim Andrücken gegen ein Unterstützungselement (beispielsweise einen Unterstützungsschlitten) zu fixieren.

Wie ebenfalls weiter oben beschrieben wurde, kann das Ausdrückelement bzw. die Ausdrückeinrichtung auch als Sensor zur Kontrolle des korrekten Ausschleusens des Werkstückteils verwendet werden, wenn das Werkstückteil mit Hilfe des einen oder der beiden Unterstützungsschlitten abgesenkt wird. Hierbei sind grundsätzlich zwei Varianten möglich, abhängig davon, ob die Unterstützungsschlitten bzw. deren Auflageflächen um eine größere Weglänge abgesenkt werden können als das Ausrückelement ausgefahren werden kann, oder ob die Weglänge, die das Ausdrückelement abgesenkt werden kann, zumindest der Weglänge entspricht, um welche die Unterstützungsschlitten bzw. deren Auflageflächen abgesenkt werden können.

Im ersten Fall bleibt während des Ausdrückens die Klemmung des Werkstückteils zwischen dem Ausdrückelement und der Auflagefläche des bzw. der Unterstützungsschlitten so lange erhalten, bis die untere Endlage des Ausdrückelements relativ zur Werkstück-Auflageebene erreicht ist. Wenn das Werkstückteil korrekt aus dem Restgitter ausgedrückt wurde, muss beim weiteren Absenken der Unterstützungsschlitten das Ausdrückelement in seiner unteren Endlage verbleiben. Falls das nicht der Fall ist, federt das Restgitter mit festhängendem Werkstückteil beim weiteren Absenken der Unterstützungsschlitten zurück und das Ausdrückelement verlässt - sofern es federnd gelagert ist - seine untere Endlage, was ein Hinweis auf einen fehlerhaften Ausdrückprozess ist. Alternativ kann bei starr gelagertem bzw. in der zweiten Stellung arretiertem Ausdrückelement ein Drucksensor den Kontakt zwischen dem Ausdrückelement und dem Werkstückteil detektieren, der bei korrektem Ausdrückprozess beim weiteren Absenken der Unterstützungsschlitten über die untere Endlage des Ausdrückelements hinaus abreißen muss.

Wenn die Ausfahrlänge des Ausdrückelements und die Absenklänge der Unterstützungsschlitten unter die Werkstück-Auflageebene einander entsprechen, kann der Ausschleusvorgang vorteilhafterweise so gestaltet werden, dass das Ausdrückelement nach Erreichen der unteren Endlage der Unterstützungsschlitten mit Hilfe der Bewegungsachse des Bearbeitungskopfs eine vorgegebene Weglänge nach oben bewegt wird. Dabei muss das Ausdrückelement seine zweite, vollständig ausgefahrene Stellung erreichen (bei gefedertem Ausdrückelement) oder ein (Druck-)Sensor muss das Abreißen des Kontakts zwischen dem Ausdrückelement und der Oberfläche des Werkstücks detektieren (bei starr gelagertem Ausdrückelement).

Bei in der zweiten Stellung federnd gelagertem Ausdrückelement kann zur Kontrolle, ob das Werkstückteil korrekt ausgedrückt wurde, bei der zweiten oben beschriebenen Variante das Erreichen der zweiten, vollständig ausgefahrenen Stellung und bei der ersten oben beschriebenen Variante das Verlassen der zweiten, ausgefahrenen Stellung detektiert werden. Wie weiter oben beschrieben wurde, gibt bei der ersten Variante, bei der die Absenklänge der Unterstützungsschlitten größer ist als die Ausfahrlänge des Ausdrückelements, das Verlassen der zweiten Stellung nach dem Erreichen der unteren Endlage des Ausdrückelements einen Hinweis auf ein nicht korrektes Ausdrücken. Bei der zweiten Variante, bei der die Absenklänge der Ausfahrlänge entspricht, kann bei der oben beschriebenen Bewegung des Ausdrückelements aus der unteren Endlage mit Hilfe der Bewegungsachse des Bearbeitungskopfs nach oben geprüft werden, ob die zweite Stellung erreicht wird. Ist dies nicht der Fall, deutet dies ebenfalls auf ein nicht korrektes Ausdrücken hin.

In Zweifelsfällen kann das in der zweiten Stellung befindliche Ausdrückelement, z.B. in Form einer Kolbenstange, innerhalb des durch das Werkstückteil in dem Werkstück hinterlassenen Lochs im Restgitter bewegt werden. Wird bei gefedert gelagertem Ausdrückelement die zweite Stellung des Ausdrückelements während dieser Bewegung verlassen, so bedeutet dies, dass sich an dieser Stelle noch Material befindet und das Werkstückteil nicht vollständig aus dem Restgitter entfernt wurde.

Bei einer weiteren Variante umfasst das Verfahren: Absenken der Auflagefläche des mindestens einen Unterstützungsschlittens und/oder des Unterstützungsschlittens selbst unter eine durch die Werkstückauflageflächen gebildete Werkstück-Auflageebene, wobei während des Absenkens das Ausdrückelement an der vorgegebenen Ausdrückposition gegen das freigetrennte Werkstückteil angedrückt wird, um das freigetrennte Werkstückteil beim Absenken auf der Auflagefläche des mindestens einen Unterstützungsschlittens in einer waagerechten Lage zu fixieren und ein Verhaken oder Verkanten zu verhindern.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Darstellung einer Maschine zur Laserbearbeitung mit zwei fest stehenden Werkstückauflageflächen, zwischen denen ein sich in Y-Richtung erstreckender Spalt gebildet ist, in dem zwei Unterstützungsschlitten sowie ein Bearbeitungskopf mit einer Ausdrückeinrichtung bewegbar sind,
- Fig. 2a-d: Darstellungen der beiden Unterstützungsschlitten von Fig. 1, deren einander zugewandte Kanten unter einem Winkel zur X-Richtung ausgerichtet sind, wobei die beiden Unterstützungsschlitten an ihren einander zugewandten Kanten jeweils einen Bereich aufweisen, der eine starre Auflage bildet bzw. bei denen der die starre Auflage bildende Bereich die gesamte Auflagefläche bildet,
- Fig. 3a-f: Darstellungen mehrerer Schritte eines Verfahrens zum Ausdrücken eines vom Restgitter freigetrennten Werkstückteils mit Hilfe eines Ausdrückelements der Ausdrückeinrichtung, sowie
- Fig. 4: eine Darstellung eines freigetrennten Werkstückteils sowie von dessen Flächenschwerpunkt, Massenschwerpunkt und Linienschwerpunkt, wobei letzterer mit einer Ausdrückposition übereinstimmt.

In der folgenden Beschreibung der Zeichnungen werden für gleiche bzw. für funktionsgleiche Bauteile identische Bezugszeichen verwendet.

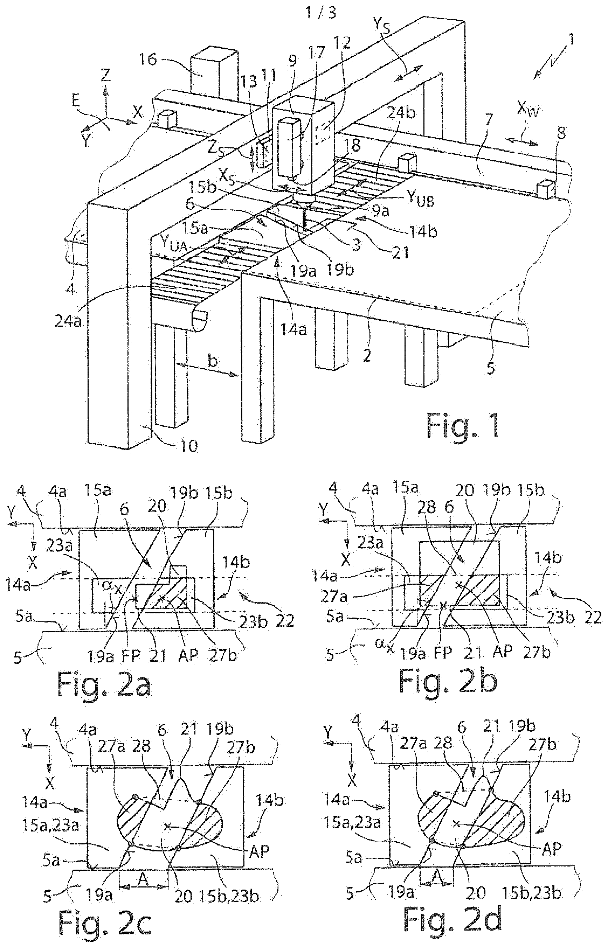

**Fig. 1** zeigt einen beispielhaften Aufbau einer Maschine 1 zur Laserbearbeitung, genauer gesagt zum Laserschneiden, eines gestrichelt dargestellten plattenförmigen Werkstücks 2 mittels eines Bearbeitungsstrahls in Form eines Laserstrahls 3. Zur schneidenden Bearbeitung des Werkstücks 2 kann an Stelle des Laserstrahls 3 auch eine andere Art von thermischem Bearbeitungsstrahl, beispielsweise eine Plasmafackel oder ein Wasserstrahl eingesetzt werden. Alternativ kann die Maschine 1 auch zum mechanischen Trennen des Werkstücks 2 ausgebildet sein, beispielsweise als Stanzmaschine oder als Stanz-Laser-Kombinationsmachine.

Das Werkstück 2 liegt bei der Bearbeitung auf zwei fest stehenden Werkstückauflageflächen 4, 5 auf, die im gezeigten Beispiel die Oberseiten von zwei Werkstücktischen bilden und die eine Werkstück-Auflageebene E (X-Y-Ebene eines XYZ-Koordinatensystems) zur Auflage des Werkstücks 2 definieren. Die Werkstückauflageflächen 4, 5 können durch Tischflächen oder durch stiftförmige Auflageelemente (Pins), Auflagebänder, Bürsten, Rollen, Kugeln, Luftpolster o.ä. gebildet werden.

Mittels einer herkömmlichen Bewegungs- und Halteeinrichtung 7, welche einen Antrieb sowie Klemmeneinrichtungen 8 in Form von Spannpratzen zum Festhalten des Werkstücks 2 aufweist, kann das Werkstück 2 auf den Werkstückauflageflächen 4, 5 in einer ersten Richtung X (im Folgenden: X-Richtung) gesteuert verschoben und an eine vorgegebene Werkstückposition X_{W} bewegt werden. Um die Bewegung des Werkstücks 2 in X-Richtung zu erleichtern, können auf den in Fig. 1 gezeigten Werkstücktischen Bürsten, Kugeln oder Gleitrollen angebracht sein, die die eigentlichen Werkstückauflageflächen 4, 5 darstellen. Alternativ ist es beispielsweise möglich, zur Bewegung oder zur Unterstützung der Bewegung des Werkstücks 2 in X-Richtung die Werkstückauflageflächen 4, 5 selbst als Bewegungseinrichtung auszugestalten, beispielsweise in Form eines (umlaufenden) Förderbandes, wie dies in der DE 10 2011 051 170 A1 der Anmelderin beschrieben ist, oder in Form einer Werkstückauflage, wie sie in der JP 06170469 beschrieben ist.

Zwischen den beiden fest stehenden Werkstückauflageflächen 4, 5 ist ein Spalt 6 gebildet, der seitlich von den fest stehenden Werkstückauflageflächen 4, 5 begrenzt wird. Der Spalt 6 erstreckt sich in einer zweiten Richtung (im Folgenden: Y-Richtung) über die gesamte Breite der beiden Werkstückauflageflächen 4, 5. Ein Laserschneidkopf 9, der den Laserstrahl 3 auf das Werkstück 2 ausrichtet und fokussiert, ist mittels eines als Bewegungseinrichtung dienenden angetriebenen Schlittens 11, der an einem fest stehenden Portal 10 geführt ist, in Y-Richtung gesteuert verfahrbar. Der Laserschneidkopf 9 ist im gezeigten Beispiel zusätzlich auch in X-Richtung verfahrbar und kann mit Hilfe einer an dem Schlitten 11 angebrachten zusätzlichen Bewegungseinrichtung 12, beispielsweise in Form eines Linearantriebs, in X-Richtung gesteuert verfahren werden.

Mit Hilfe der aufeinander aufbauenden Bewegungseinrichtungen 11, 12 kann der Laserschneidkopf 9 sowohl in X-Richtung als auch in Y-Richtung an einer gewünschten Schneidkopfposition X_{S}, Y_{S} innerhalb des Spalts 6 positioniert werden. Zusätzlich kann der Laserschneidkopf 9 im gezeigten Beispiel mittels einer dritten Bewegungseinrichtung 13, die auf die zweite Bewegungseinrichtung 11 aufbaut, entlang einer dritten Bewegungsrichtung Z (Schwerkraftrichtung, im Folgenden: Z-Richtung) bewegt werden, um den Abstand zwischen einer Bearbeitungsdüse 9a des Laserschneidkopfs 9 und der Oberfläche des Werkstücks 2 einzustellen bzw. um den Laserschneidkopf 9 an einer gewünschten Schneidkopfposition Z_{S} in Z-Richtung relativ zur Werkstück-Auflageebene E zu positionieren.

In dem in Fig. 1 gezeigten Spalt 6 sind zur zusätzlichen Unterstützung des Werkstücks 2 und zur Unterstützung von beim trennenden Bearbeiten geschnittenen Werkstückteilen 20 zwei Unterstützungsschlitten 14a, 14b angeordnet, die in Fig. 2 in einer Draufsicht dargestellt sind. Die beiden Unterstützungsschlitten 14a, 14b erstrecken sich jeweils über die gesamte Breite b des Spalts 6 und sind in dem Spalt 6 in Y-Richtung gesteuert und unabhängig voneinander verfahrbar. Die gesteuerte Bewegung der Unterstützungsschlitten 14a, 14b zwischen den Seitenkanten 4a, 5a der fest stehenden Werkstückauflageflächen 4, 5 kann beispielsweise mit Hilfe von Spindelantrieben erfolgen, wobei die Spindelmutter an dem jeweiligen Unterstützungsschlitten 14a, 14b angebracht ist und die Spindel sowie der Antriebsmotor an einer der beiden fest stehenden Werkstückauflagen 4, 5 angebracht sind. Es versteht sich, dass die gesteuerte Bewegung der Unterstützungsschlitten 14a, 14b auch auf andere Weise realisiert werden kann.

Die Unterstützungsschlitten 14a, 14b können in dem Spalt 6 jeweils an eine gewünschte Position Y_{UA}, Y_{UB} entlang der zweiten Richtung Y bewegt werden, um dort das Werkstück 2 sowie von dem Werkstück 2 freizuschneidende bzw. beim Bearbeiten geschnittene Werkstückteile 20 mittels einer an dem jeweiligen Unterstützungsschlitten 14a, 14b angebrachten Auflagefläche 15a, 15b zu unterstützen. Die Auflagefläche 15a, 15b eines jeweiligen Unterstützungsschlittens 14a, 14b schließt im gezeigten Fall in Z-Richtung bündig mit den Werkstückauflageflächen 4, 5 ab, d.h. die Auflageflächen 15a, 15b der Unterstützungsschlitten 14a, 14b befinden sich in der Auflageebene E für das Werkstück 2.

Die Bewegung der Unterstützungsschlitten 14a, 14b kann synchron erfolgen, d.h. der Abstand zwischen der Position Y_{UA} des ersten Unterstützungsschlittens 14a und der Position Y_{UB} des zweiten Unterstützungsschlittens 14b in der zweiten Richtung Y ist während der Bewegung konstant. Die Bewegung des ersten Unterstützungsschlittens 14a kann auch unabhängig von der Bewegung des zweiten Unterstützungsschlittens 14b erfolgen, d.h. der Abstand zwischen der Position Y_{UA} des ersten Unterstützungsschlittens 14a und der Position Y_{UB} des zweiten Unterstützungsschlittens 14b verändert sich während der Bewegung entlang der zweiten Richtung Y.

Bei dem in Fig. 1 gezeigten Beispiel ist an den, in X-Richtung verlaufenden, voneinander abgewandten Seitenkanten der Auflageflächen 15a, 15b der Unterstützungsschlitten 14a, 14b jeweils ein Überdeckungselement 24a, 24b zur Abdeckung des Spalts 6 zwischen den beiden Werkstückauflageflächen 4, 5 angebracht. Die Überdeckungselemente 24a, 24b erstrecken sich über die gesamte Breite b des Spalts 6, werden beim Bewegen der Unterstützungsschlitten 14a, 14b in Y-Richtung mitbewegt und sind im gezeigten Beispiel rolladenförmig ausgebildet. Die Überdeckungselemente 24a, 24b können auch auf andere Weise, z.B. teleskopförmig, schuppenförmig, als aufgerolltes Band, etc. ausgebildet sein. Die Oberseite der Überdeckungselemente 24a, 24b befindet sich auf der Höhe der Auflageflächen 15a, 15b der Unterstützungsschlitten 14a, 14b bzw. der Werkstückauflageflächen 4, 5. Die Überdeckungselemente 24a ,24b dienen zur Auflage von in den Spalt 6 hinein ragenden, nicht biegesteifen Teilbereichen des (Rest-)Werkstücks 2, die ohne eine solche Auflage gegebenenfalls mit den Unterstützungsschlitten 14a, 14b kollidieren könnten.

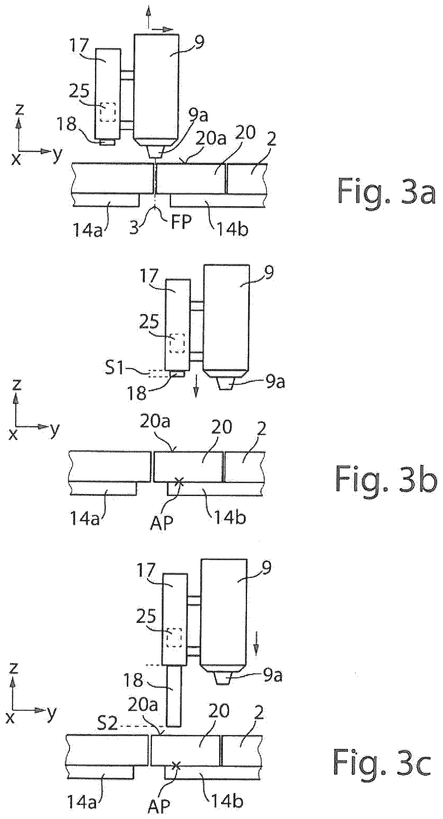

Zur Steuerung der schneidenden Bearbeitung weist die Maschine 1 eine Steuerungseinrichtung 16 auf, die zur Koordinierung der Bewegungen des Werkstücks 2, des Laserschneidkopfs 9 sowie der Unterstützungsschlitten 14a, 14b dient, um eine gewünschte Werkstückposition X_{W}, eine gewünschte Schneidkopfposition X_{S}, Y_{S}, Zₛ sowie eine gewünschte Position Y_{UA}, Y_{UB} der Unterstützungsschlitten 14a, 14b einzustellen, um das Schneiden einer vorgegebenen Schnittkontur 21 zu ermöglichen und das Werkstück 2 ausreichend zu unterstützen. Die Steuerungseinrichtung 16 dient im gezeigten Beispiel auch zur Steuerung einer an dem Laserschneidkopf 9 seitlich befestigten Ausdrückeinrichtung 17, die in Form eines Ausdrückzylinders ausgebildet ist, dessen Kolbenstange als Ausdrückelement 18 zum Ausdrücken von freigetrennten Werkstückteilen dient, wie nachfolgend anhand von Fig. 2a,b und Fig. 3a-f beschrieben wird.

**Fig. 2a****-d** zeigen den sich in Y-Richtung erstreckenden Spalt 6 mit den beiden fest stehenden Werkstückauflageflächen 4, 5, deren einander zugewandte Seitenkanten 4a, 5a parallel zur Y-Richtung ausgerichtet sind. Beim Freischneiden eines Werkstückteils 20 entlang seiner Schnitt- bzw. Außenkontur 21, die in den in Fig. 2a,b gezeigten Beispielen parallel und rechtwinklig zur X-Richtung verläuft, kann es vorkommen, dass dieses in einer Lage, in der das Werkstückteil 20 an einer Freischneideposition FP vollständig vom Restwerkstück getrennt wird, nur auf der Auflagefläche 15b eines der beiden Unterstützungsschlitten 14b aufliegt, so dass dieses nur in dem in Fig. 2a schraffiert dargestellten Teilbereich von der Auflagefläche 15b des zweiten Unterstützungsschlittens 14b unterstützt wird. Es versteht sich, dass eine ähnliche Situation auch auftreten kann, wenn an Stelle der in Fig. 2a,b gezeigten zwei Unterstützungsschlitten 14a, 14b nur ein einziger Unterstützungsschlitten, beispielsweise nur der zweite Unterstützungsschlitten 14b, in dem Spalt 6 angeordnet ist.

Ein Großteil der von dem Werkstück 2 freigetrennten Werkstückteile 20 weist üblicher Weise ungefähr rechtwinklige Außenmaße sowie - falls vorhanden - Innenkonturen auf, die im 0°- oder im 90°-Winkel zu den Außenkanten des Werkstücks 2 ausgerichtet sind. Um Werkstückteile 2 besser zu unterstützen, die lange zungenförmige Teilbereiche aufweisen, die sich in X-Richtung oder in Y-Richtung erstrecken, sind bei dem in Fig. 2a-d gezeigten Beispiel die beiden einander zugewandten, parallel ausgerichteten seitlichen Kanten 19a, 19b der Auflageflächen 15a, 15b der beiden Unterstützungsschlitten 14a, 14b schräg, d.h. unter einem Winkel αₓ zur X-Richtung, ausgerichtet. Wie in Fig. 2b zu erkennen ist, kann eine solche schräge Ausrichtung der Kanten 19a, 19b auch bei einem Werkstückteil 20 günstig sein, welches eine rechteckige Geometrie aufweist, da dieses durch die schräge Ausrichtung der Kanten 19a, 19b auf den Auflageflächen 15a, 15b beider Unterstützungsschlitten 14a, 14b aufliegt, wie in Fig. 2b durch die schraffiert dargestellten Teilflächen 27a, 27b angedeutet ist. In diesem Fall kann die Ausdrückposition AP zwischen den beiden Unterstützungsschlitten 15a, 15b gewählt werden, wie dies in Fig. 2b dargestellt ist. Der Winkel αₓ, den die beiden Kanten 19a, 19b der Auflageflächen 15a, 15b mit der X-Richtung einschließen, liegt zwischen ca. 20° und 40°, besser zwischen 25° und 35°, idealer Weise bei ca. 30°.

Fig. 2a,b zeigen den Bewegungsbereich 22 des Laserschneidkopfs 9 in X-Richtung, d.h. diejenigen Schneidkopfpositionen X_{S}, an denen der Laserstrahl 3 durch Verfahren des Laserschneidkopfs 9 in X-Richtung positioniert werden kann. Wie in Fig. 2a,b ebenfalls zu erkennen ist, ist die Breite b des Spalts 6 mehr als doppelt so groß wie die Ausdehnung des Bewegungsbereichs 22 des Laserschneidkopfs 9 in X-Richtung, es ist aber selbstverständlich auch möglich, dass der Bewegungsbereich 22 in X-Richtung eine größere Ausdehnung aufweist.

In Fig. 2a,b sind zwei Bereiche 23a, 23b der Auflageflächen 15a, 15b gezeigt, die benachbart zu den Kanten 19a, 19b angeordnet sind und die eine starre Auflage für das Werkstück 2 bzw. für das freigetrennte Werkstückteil 20 bilden. Die Bereiche 23a, 23b, welche die starre Auflage bilden, sind aus einem harten (Festkörper-)Material, beispielsweise aus Kupfer, gebildet, so dass diese als Gegenlager für das Ausdrückelement 18 dienen können, welches an einer in Fig. 2a,b gezeigten Ausdrückposition AP, die sich innerhalb eines jeweiligen Bereichs 23a, 23b befindet, gegen das freigetrennte Werkstückteil 20 gedrückt wird. Außerhalb des Bereichs 23a, 23b, welcher die starre Auflage bildet, kann die Auflagefläche 15a, 15b eines jeweiligen Unterstützungsschlittens 14a, 14b beispielsweise als Bürstenauflage ausgebildet sein, welche das aufliegende Werkstück 2 bzw. das Werkstückteil 20 kratzerfrei unterstützt, wie dies in Fig. 2a,b dargestellt ist. Alternativ kann auch die gesamte Auflagefläche 15a, 15b einen eine starre Auflage bildenden Bereich 23a, 23b bilden, wie dies in Fig. 2c,d dargestellt ist.

Bei dem in Fig. 2a dargestellten Fall wird eine Ausdrückposition AP gewählt, die sich in dem schraffierten Teilbereich des Werkstückteils 20 befindet, der auf dem starren Bereich 23b der Auflagefläche 15b des zweiten Unterstützungsschlittens 14b liegt Bei dem in Fig. 2b dargestellten Fall kann die Ausdrückposition auch zwischen den Unterstützungsschlitten 14a, 14b gewählt werden. Um ein Verkippen des Werkstückteils 20 zu vermeiden, sollte die Ausdrückposition AP das Kriterium erfüllen, dass diese innerhalb der konvexen Hülle der der Teilflächen 27a, 27b des Werkstückteils 20 liegt, die auf den starren Bereichen 23a, 23b der Auflageflächen 15a, 15b aufliegen. Innerhalb der konvexen Hülle dieser Teilflächen 27a, 27b wird die Ausdrückposition AP von der Steuerungseinrichtung 16 auf eine Art und Weise vorgegeben, die weiter unten näher beschrieben wird.

Fig. 2c,d illustrieren anhand von einem Werkstückteil 20, das eine komplexe Außenkontur 21 aufweist, das Konzept der konvexen Hülle 28 der beiden Teilflächen 27a, 27b des Werkstückteils 20, die auf den Auflageflächen 15a, 15b der beiden Unterstützungsschlitten 14a, 14b aufliegen. Anders als bei den in Fig. 2a,b dargestellten Unterstützungsschlitten 14a, 14b bildet bei den in Fig. 2c,d gezeigten Unterstützungsschlitten 14a, 14b die gesamte Auflagefläche 15a, 15b einen eine starre Auflage bildenden Bereich 23a, 23b. Wie bei dem in Fig. 2c,d gezeigten Werkstückteil 20 zu erkennen ist, verändert sich die konvexe Hülle 28 in Abhängigkeit vom Abstand A zwischen den beiden Unterstützungsschlitten 14a, 14b in Y-Richtung. Durch die Veränderung des Abstands A in Y-Richtung zwischen den beiden Unterstützungsschlitten 14a, 14b kann daher die konvexe Hülle 28 des Werkstückteils 20 vor dem Ausdrücken mittels des Ausdrückelements 18 derart angepasst werden, dass eine geeignete, optimale Ausdrückposition AP innerhalb der konvexen Hülle 28 gefunden wird.

Das Ausdrücken des in Fig. 2a gezeigten, freigetrennten Werkstückteils 20 mit Hilfe des Ausdrückelements 18 kann beispielsweise auf die nachfolgend in Zusammenhang mit **Fig. 3a****-f** beschriebene Weise erfolgen:
Fig. 3a zeigt den Laserschneidkopf 9 beim Freischnitt des in Fig. 2a gezeigten Werkstückteils 20 mittels des Laserstrahls 3, bei dem das Werkstückteil 20 von den beiden Unterstützungsschlitten 14a, 14b unterstützt wird. Nach dem Ausschalten des Laserstrahls 3 wird der Laserschneidkopf 9 mit Hilfe der zweiten Bewegungseinrichtung 11 in Y-Richtung sowie mit Hilfe der dritten Bewegungseinrichtung 12 in X-Richtung innerhalb des Spalts 6 bewegt, bis das Ausdrückelement 18 über der Ausdrückposition AP positioniert ist, wie dies in Fig. 3b dargestellt ist.

Der Laserschneidkopf 9 und somit auch die Ausdrückeinrichtung 17 (nachfolgend auch als Ausdrückzylinder bezeichnet) werden gleichzeitig mit Hilfe der vierten Bewegungseinrichtung 13 in Z-Richtung nach oben verschoben, um den Abstand von der Oberseite 20a des freigetrennten Werkstückteils 20 bzw. vom (Rest-)Werkstück 2 zu vergrößern. Der Laserschneidkopf 9 wird hierbei so weit nach oben verfahren, dass das Ausdrückelement 18 aus einer in Fig. 3b gezeigten ersten, zurückgezogenen Stellung S1, in welcher das Ausdrückelement 18 (nachfolgend auch als Kolbenstange bezeichnet) nicht nach unten über den Laserschneidkopf 9, genauer gesagt über die Bearbeitungsdüse 9a, übersteht, in eine in Fig. 3c gezeigte zweite, ausgefahrene Stellung S2, verschoben werden kann, in welcher das Ausdrückelement 18 über die Bearbeitungsdüse 9a übersteht.

Das als Kolbenstange ausgebildete Ausdrückelement 18 des Ausdrückzylinders 17 wird mittels eines Aktors von der ersten, oberen Stellung S1, welche eine obere Endlage bildet, in die zweite, untere Stellung S2 verschoben, welche eine untere Endlage des Ausdrückelements 18 bildet. Bei dem Ausdrückzylinder 17 handelt es sich im gezeigten Beispiel um einen Pneumatikzylinder, dem ein Arbeitsgas zugeführt wird, um die Kolbenstange 18 zu verschieben. Der Ausdrückzylinder 17 kann daher als Gasfeder dienen, d.h. die Kolbenstange 18 kann in der zweiten Stellung S2 gegen eine Federkraft nach oben gedrückt werden, wenn diese auf die Oberseite 20a des freigetrennten Werkstückteils 20 aufgesetzt wird und gegen dieses andrückt. Alternativ kann als Aktuator ein motorischer Antrieb dienen, der beispielsweise über eine Welle eine Verschiebung des Ausdrückelements 18 bewirkt. In diesem Fall wird das Ausdrückelement 18 typischer Weise in der zweiten Stellung S2 arretiert bzw. zugestellt, so dass dieses aus der zweiten Stellung S2 nicht nach oben, d.h. in Richtung auf die erste Stellung S1, verschoben werden kann.

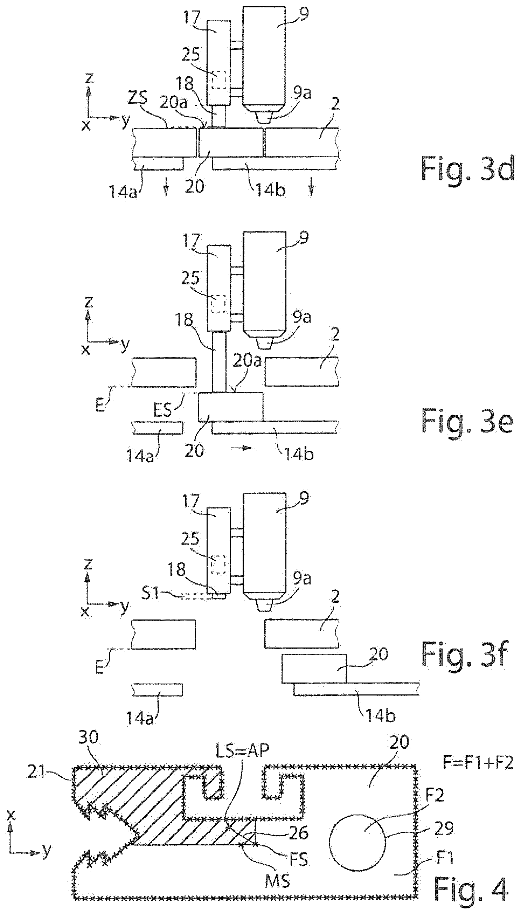

Im gezeigten Beispiel wird der Bearbeitungskopf 9 nach unten verschoben, bis die Kolbenstange 18 des Ausdrückzylinders 17 gegen die Oberseite 20a des freigetrennten Werkstückteils 20 drückt. Hierbei wird die Kolbenstange 18 aus der in Fig. 3c gezeigten zweiten Stellung S2 in eine in Fig. 3d gezeigte Zwischenstellung ZS zurückgedrückt, die gegenüber der zweiten Stellung S2 in Richtung auf die erste Stellung S1 verschoben ist. Durch den Druck, den die Kolbenstange 18 in der Zwischenstellung ZS auf das freigetrennte Werkstückteil 20 ausübt, wird dieses aus dem (Rest-)Werkstück 2 ausgedrückt, wenn die beiden Unterstützungsschlitten 14a, 14b aus der Werkstück-Auflageebene E nach unten abgesenkt werden, wie dies in Fig. 3e dargestellt ist.

Die Zwischenstellung ZS ist so gewählt, dass beim synchronen Absenken der beiden Unterstützungsschlitten 14a, 14b unter die Werkstück-Auflageebene E die Kolbenstange 18 so weit ausgefahren werden kann, dass diese auch bei der in Fig. 3e gezeigten unteren Endstellung der Unterstützungsschlitten 14a, 14b noch gegen die Oberseite 20a des freigetrennten Werkstückteils 20 drückt und dieses in seiner horizontalen Lage fixiert. Alternativ oder ergänzend kann beim Absenken der Unterstützungsschlitten 14a, 14b der Bearbeitungskopf 9 (insbesondere synchron) um eine bestimmte Weglänge mit abgesenkt werden, um die Vorspannung der in der Zwischenstellung ZS befindlichen Kolbenstange 18 gegen das Werkstückteil 20 aufrecht zu erhalten.

Sobald die Unterstützungsschlitten 14a, 14b ihre untere Endstellung erreicht haben, kann die Kolbenstange 18 aus ihrer unteren Endstellung ES in die erste Stellung S1 zurück bewegt werden, wie dies in Fig. 3f gezeigt ist.

Zum Ausschleusen kann das freigetrennte Werkstückteil 20 unter der Werkstück-Auflageebene E in dem Spalt 6 bewegt werden, indem der zweite Unterstützungsschlitten 14b in Y-Richtung verschoben wird, bis eine (nicht gezeigte) Ausschleusposition erreicht ist, in der das freigetrennte Werkstückteil 20 nach unten ausgeschleust wird, beispielsweise indem der zweite Unterstützungsschlitten 14b so schnell unter dem freigetrennten Werkstückteil 20 weggezogen wird, dass dieses nach unten fällt. Nach dem Ausschleusen des freigetrennten Werkstückteils 20 werden die Unterstützungsschlitten 14a, 14b an eine geeignete Position Y_{U1}, Y_{U2} in dem Spalt 6 verschoben, um die schneidende Bearbeitung des Werkstücks 2 fortzusetzen. Alternativ kann das freigetrennte Werkstückteil auch ohne vorherige seitliche Bewegung nach unten ausgeschleust werden.

Zur Kontrolle, ob das freigetrennte Werkstückteil 20 vollständig aus dem Rest-Werkstück 2 ausgedrückt wurde, weist der Ausdrückzylinder 17 einen Sensor 25 auf, der beispielsweise als Wegsensor ausgebildet sein kann und der die Position bzw. die Stellung des Ausdrückelements 18 relativ zum unteren Ende des Ausdrückzylinders 17, bestimmt. Bei dem in Fig. 3e gezeigten Beispiel befindet sich das Ausdrückelement 18 in der unteren Endstellung der Unterstützungsschlitten 14a, 14b in einer unteren Endstellung ES, die gegenüber der zweiten Stellung S2 in Richtung auf das untere Ende des Ausdrückzylinders 17 zurückgezogen ist.

Wird das Ausdrückelement 18 nun durch Verfahren des Laserschneidkopfs 9 eine vorgegebene Weglänge nach oben bewegt, so bewegt sich das Ausdrückelement 18 bei korrekt ausgeschleustem Werkstückteil 20 in die zweite Stellung S2, d.h. das Ausdrückelement 18 erreicht seine untere Endlage S2 relativ zum Ausdrückzylinder 17. Das Erreichen der zweiten Stellung S2 kann mit Hilfe des Weg-Sensors 25 detektiert werden und deutet auf ein korrektes Ausdrücken des Werkstückteils 20 hin. Ist das Werkstückteil 20 nicht korrekt ausgedrückt, so wird bei der Bewegung des Laserschneidkopfs 9 um die vorgegebene Weglänge nach oben die zweite Stellung S2 nicht erreicht.

Wird an Stelle eines federnd gelagerten Ausdrückelements 18 ein in der zweiten Stellung S2 starr gelagertes, motorisch angetriebenes Ausdrückelement 18 verwendet, so kann der Sensor 25 als Druck-Sensor ausgebildet sein. Mit dem Druck-Sensor wird detektiert, ob bei der Bewegung des Laserschneidkopfs 9 in Z-Richtung nach oben der Kontakt zwischen der Werkstückoberfläche 20a des Werkstückteils 20 und dem Ausdrückelement 18 abreißt. Ist dies nach einer bestimmten vorgegebenen Weglänge nicht der Fall, deutet dies darauf hin, dass das Werkstückteil 20 sich noch im Rest-Werkstück 2 befindet.

Für den Fall, dass anders als in Fig. 3e dargestellt ist, die beiden Unterstützungsschlitten 14a, 14b so weit abgesenkt werden können, dass der Kontakt zwischen der Werkstückoberseite 20a des Werkstückteils 20 und dem Ausdrückelement 18 beim Absenken abreißt, so kann das Abreißen des Kontakts bei starr gelagertem Ausdrückelement 18 mit Hilfe des Druck-Sensors 25 detektiert werden und deutet auf ein korrektes Ausdrücken des Werkstückteils 20 hin.

Sofern das Ausdrückelement 18 federnd gelagert ist, kann für den Fall, dass die Unterstützungsschlitten 14a, 14b über die untere Endstellung ES bzw. die zweite Stellung S2 hinaus abgesenkt werden können, mit Hilfe des Weg-Sensors 25 detektiert werden, ob nach dem Erreichen der zweiten Stellung S2 bei der Abwärtsbewegung diese wieder verlassen wird: Wird das Werkstückteil 20 nicht korrekt ausgedrückt, federt das Rest-Werkstück 2 gemeinsam mit dem festhängenden Werkstückteil 20 beim weiteren Absenken der Unterstützungsschlitten 14a, 14b zurück, und das Ausdrückelement 18 verlässt die zweite Stellung S2. Das Verlassen der zweiten Stellung S2 deutet daher auf einen fehlerhaften Ausdrückvorgang hin.

In Zweifelsfällen kann das in der zweiten Stellung S2 befindliche Ausdrückelement 18 in Form der Kolbenstange innerhalb des durch das Werkstückteil 20 in dem Werkstück 2 hinterlassenen Lochs im Rest-Werkstück 2 bewegt werden. Wird bei gefedert gelagertem Ausdrückelement 18 die zweite Stellung S2 des Ausdrückelements 18 bei dieser Bewegung verlassen, so bedeutet dies, dass sich an dieser Stelle noch Material befindet und das Werkstückteil 20 nicht vollständig aus dem Rest-Werkstück 2 entfernt wurde.

Nachfolgend wird anhand von Fig. 4 erläutert, auf welche Weise die Steuerungseinrichtung 16 eine optimale Ausdrückposition AP für ein Werkstückteil 20 mit einer nicht symmetrischen Außenkontur 21 vorgibt. Das in Fig. 4 gezeigte Werkstückteil 20 weist eine im Wesentlichen rechteckige Geometrie auf, in der zwei Aussparungen und eine kreisförmige Innenkontur 29 gebildet sind. Das Werkstückteil 20 weist aufgrund seiner vergleichsweise komplexen Geometrie einen Flächenschwerpunkt FS und einen Massenschwerpunkt MS auf, die von einem Linienschwerpunkt LS der Außenkontur 21 des Werkstückteils 20 abweichen. Der Flächenschwerpunkt FS wird ohne Berücksichtigung der Innenkontur 29 berechnet, also so, als ob das Werkstückteil 20 die Innenkontur 29 nicht aufweisen würde, d.h. für die Berechnung des Flächenschwerpunkts FS wird die gesamte von der Außenkontur 21 umgebene Fläche F, d.h. sowohl die Fläche F1 außerhalb der Innenkontur 29 als auch die Fläche F2 innerhalb der Innenkontur 21 verwendet (F = F1 + F2). Der Linienschwerpunkt LS der Außenkontur 21 des Werkstücks 20 kann veranschaulicht werden, indem an der Außenkontur 21 eine Vielzahl von in Fig. 4 durch Kreuze angedeuteten Punkten mit gleichem Abstand gesetzt bzw. definiert werden. Der Mittelwert der X- bzw. Y-Positionen der Punkte entlang der Außenkontur 21 bildet den Linienschwerpunkt LS des Werkstückteils 20.

Der Linienschwerpunkt LS ist generell, d.h. nicht nur bei dem in Fig. 4 beispielhaft gezeigten Werkstückteil 20 vom Flächenschwerpunkt FS bzw. vom Massenschwerpunkt MS in Richtung auf die komplexen Teilbereiche des Werkstückteils 20 verschoben. An den komplexen Teilbereichen des Werkstückteils 20 ist die Reibung des Werkstückteils 20 beim Ausdrücken aus dem Rest-Werkstück 2 besonders groß, so dass diese Teilbereiche potentielle Problemstellen für das Ausdrücken darstellen.

Es ist günstig, die Ausdrückposition AP in der Nähe derartiger Problemstellen zu wählen bzw. vorzugeben, um die Krafteinwirkung an den komplexen Teilbereichen des Werkstückteils 20 durch einen verkürzten Hebelarm zu erhöhen. Insbesondere ist es günstig, als Ausdrückposition AP den Linienschwerpunkt LS zu wählen, wie dies in Fig. 4 gezeigt ist. Alternativ kann die Ausdrückposition AP vom Massenschwerpunkt MS oder vom Flächenschwerpunkt FS des Werkstückteils 20 in Richtung auf den Linienschwerpunkt LS versetzt, vorzugsweise in der Nähe des Linienschwerpunkts LS, gewählt werden, d.h. allgemein in einem Teilbereich 30 des Werkstückteils 20 zwischen dem Flächenschwerpunkt FS oder dem Massenschwerpunkt MS und der Außenkontur 21 liegen, in dem sich auch der Linienschwerpunkt LS befindet. Dieser Teilbereich 30, in den die Ausdrückposition AP versetzt wird, ist in Fig. 4 am Beispiel des Flächenschwerpunkts FS schraffiert gezeigt: Als Begrenzung dieses Teilbereichs 30 in X- und Y-Richtung wurde die X-Position und die Y-Position des Flächenschwerpunkts FS gewählt.

Insbesondere kann eine Ausdrückposition AP gewählt werden, die entlang der in Fig. 4 gezeigten Verbindungslinie 26 zwischen dem Linienschwerpunkt LS und dem Flächenschwerpunkt FS oder einer Verbindungslinie zwischen dem Linienschwerpunkt LS und dem Massenschwerpunkt MS liegt. Eine Versetzung der Ausdrückposition AP gegenüber dem Linienschwerpunkt LS kann beispielsweise sinnvoll sein, wenn am Linienschwerpunkt LS eine Aussparung bzw. eine Öffnung in dem Werkstückteil 20 gebildet ist, so dass das Ausdrückelement 18 nicht am Linienschwerpunkt LS ansetzen kann. Insbesondere kann die Ausdrückposition AP in diesem Fall am nächstgelegenen Punkt entlang der Verbindungslinie 26 angeordnet werden, an welcher sich noch Material des Werkstückteils 20 befindet. Es kann auch Anwendungsfälle geben, in denen die Ausdrückposition AP vorteilhaft an einer anderen Stelle zwischen dem Linienschwerpunkt LS und der Außenkontur 21 des Werkstückteils 20 gewählt wird.

Zusammenfassend kann mit Hilfe des Ausdrückzylinders 17 die Prozesssicherheit beim Ausdrücken und Ausschleusen von Werkstückteilen 20 deutlich erhöht werden. Dies gilt insbesondere, wenn eine optimierte Ausschleusposition AP für das Andrücken des Ausdrückelements 18 gegen das Werkstück 2 vorgegeben wird.

## Patentansprüche

1. Maschine (1) zum trennenden Bearbeiten eines plattenförmigen Werkstücks (2), mit:
einer ersten Bewegungseinrichtung (7) zur Bewegung des Werkstücks (2) in einer ersten Richtung (X),
einer zweiten Bewegungseinrichtung (11) zur Bewegung eines Bearbeitungskopfs (9) für die trennende Bearbeitung in einer zweiten Richtung (Y), sowie zwei Werkstückauflageflächen (4, 5) zur Auflage des Werkstücks (2), zwischen denen ein sich entlang der zweiten Richtung (Y) erstreckender Spalt (6) gebildet ist,
**gekennzeichnet durch**
eine Ausdrückeinrichtung (17) mit einem Ausdrückelement (18), wobei das Ausdrückelement (18) zumindest in der zweiten Richtung (Y) innerhalb des Spalts (6) bewegbar ist, um an einer vorgegebenen Ausdrückposition (AP) gegen ein beim trennenden Bearbeiten vom Werkstück (2) freigetrenntes Werkstückteil (20) anzudrücken, sowie durch
eine Steuerungseinrichtung (16), die ausgebildet ist, bei einem freigetrennten Werkstückteil (20), bei dem der Flächenschwerpunkt (FS) einer von der Außenkontur (21) des freigetrennten Werkstückteils (20) umgebenen Fläche (F) oder der Massenschwerpunkt (MS) vom Linienschwerpunkt (LS) abweicht, eine Ausdrückposition (AP) vorzugeben, die dem Linienschwerpunkt (LS) entspricht oder vom Flächenschwerpunkt (FS) oder vom Massenschwerpunkt (MS) des freigetrennten Werkstückteils (20) in Richtung auf dessen Linienschwerpunkt (LS) versetzt ist.

2. Maschine nach Anspruch 1, die eine dritte Bewegungseinrichtung (12) zur Bewegung des Bearbeitungskopfs in der ersten Richtung (X) innerhalb des Spalts (6) aufweist und bei der die Ausdrückeinrichtung (17) mittels der zweiten und dritten Bewegungseinrichtung (11, 12) innerhalb des Spalts (6) bewegbar ist.

3. Maschine nach Anspruch 1 oder 2, bei der die Ausdrückeinrichtung (17) ausgebildet ist, das Ausdrückelement (18) zwischen einer ersten, zurückgezogenen Stellung (S1), in der das Ausdrückelement (17) nicht über ein dem Werkstück (2) zugewandtes Ende des Bearbeitungskopfs (9) übersteht, und einer zweiten, ausgefahrenen Stellung (S2) zu bewegen, in der das Ausdrückelement (18) über das dem Werkstück (2) zugewandte Ende des Bearbeitungskopfs (9) übersteht.

4. Maschine nach Anspruch 3, bei der das Ausdrückelement (18) in der zweiten Stellung (S2) zustellbar oder federnd gelagert ist.

5. Maschine nach einem der vorhergehenden Ansprüche, weiter umfassend:
mindestens einen innerhalb des Spalts (6) in der zweiten Richtung (Y) verfahrbaren Unterstützungsschlitten (14a, 14b), der eine Auflagefläche (15a, 15b) zur Unterstützung des Werkstücks (2) und von beim trennenden Bearbeiten geschnittenen Werkstückteilen (20) aufweist,
wobei der Unterstützungsschlitten (14a, 14b) und/oder die Auflagefläche (15a, 15b) relativ zum Unterstützungsschlitten (14a, 14b) unter eine durch die Werkstückauflageflächen (4, 5) gebildete Werkstück-Auflageebene (E) absenkbar ist/sind,
wobei die Auflagefläche (15a, 15b) des Unterstützungsschlittens (14a, 14b) einen Bereich (23a, 23b) aufweist, der eine starre Auflage bildet,
und wobei der Unterstützungsschlitten (14a, 14b) und das Ausdrückelement (18) relativ zueinander derart positionierbar sind, dass die Ausdrückposition (AP) in dem Bereich (23a, 23b) der Auflagefläche (15a, 15b) angeordnet ist, der die starre Auflage bildet.

6. Maschine nach Anspruch 5, bei der eine Erstreckung des die starre Auflage bildenden Bereichs (23a, 23b) in der ersten Richtung (X) der Erstreckung eines Bewegungsbereichs (22) des Bearbeitungskopfs (9) in der ersten Richtung (X) entspricht.

7. Maschine nach einem der Ansprüche 5 oder 6, welche zwei innerhalb des Spalts (6) verfahrbare Unterstützungsschlitten (14a, 14b) aufweist, deren Auflageflächen (15a, 15b) an ihren einander zugewandten Kanten (19a, 19b) jeweils einen Bereich (23a, 23b) aufweisen, der die starre Auflage bildet.

8. Maschine nach Anspruch 7, bei der die Kanten (19a, 19b) der Auflageflächen (15a, 15b) unter einem Winkel (α_{X}) zur ersten Richtung (X) und zur zweiten Richtung (Y) ausgerichtet sind.

9. Maschine nach einem der vorhergehenden Ansprüche, bei welcher die Ausdrückeinrichtung (17) mindestens einen Sensor (25) zur Detektion des Erreichens der zweiten, ausgefahrenen Stellung (S2) durch das Ausdrückelement (18) und/oder zur Detektion eines Kontakts des Ausdrückelements (18) mit der Oberfläche (20a) des freigetrennten Werkstückteils (20) aufweist.

10. Maschine nach einem der Ansprüche 5 bis 9, wobei die Steuereinrichtung (16) weiter ausgebildet ist, das Ausdrückelement (18) und den oder die Unterstützungsschlitten (14a, 14b) für das Ausdrücken eines freigetrennten Werkstückteils (20) derart relativ zueinander zu positionieren, dass entweder der eine starre Auflage bildende Bereich (23a, 23b) der Auflagefläche (15a, 15b) eines Unterstützungsschlittens (14a, 14b) an der Ausdrückposition (AP) angeordnet ist oder die Ausdrückposition (AP) zwischen den beiden Unterstützungsschlitten (14a, 14b), insbesondere zwischen den eine starre Auflage bildenden Bereichen (23a, 23b) der Unterstützungsschlitten (14a, 14b), liegt.

11. Maschine nach Anspruch 10, bei der die Steuerungseinrichtung (16) ausgebildet ist, die vorgegebene Ausdrückposition (AP) innerhalb einer konvexen Hülle (28) von Teilflächen (27a, 27b) des Werkstückteils (20) liegt, die auf den Auflageflächen (15a, 15b), insbesondere auf den eine starre Auflage bildenden Bereichen (23a, 23b) der Auflageflächen (15a, 15b), aufliegen.

12. Verfahren zum Ausdrücken eines aus einem Werkstück (2) freigetrennten Werkstückteils (20), bei dem der Flächenschwerpunkt (FS) der von einer Außenkontur (21) des freigetrennten Werkstückteils (20) umgebenen Fläche (F) oder der Massenschwerpunkt (MS) vom Linienschwerpunkt (LS) abweicht, an einer Maschine (1) zum trennenden Bearbeiten des plattenförmigen Werkstücks (2) nach einem der vorhergehenden Ansprüche, umfassend:
Bewegen des Ausdrückelements (18) an eine vorgegebene Ausdrückposition (AP), sowie Drücken des Ausdrückelements (18) gegen das freigetrennte Werkstückteil (20) an der vorgegebenen Ausdrückposition (AP),
**dadurch gekennzeichnet,**
**dass** bei dem freigetrennten Werkstückteil (20) eine Ausdrückposition (AP) vorgegeben wird, die vom Flächenschwerpunkt (FS) oder vom Massenschwerpunkt (MS) des freigetrennten Werkstückteils (20) in Richtung auf dessen Linienschwerpunkt (LS) versetzt ist oder mit dem Linienschwerpunkt (LS) übereinstimmt.

13. Verfahren nach Anspruch 12, bei dem die Ausdrückposition (AP) innerhalb einer konvexen Hülle (28) derjenigen Teilflächen (27a, 27b) des Werkstückteils (20) vorgegeben wird, die auf Auflageflächen (15a, 15b), insbesondere auf eine starre Auflage bildenden Bereichen (23a, 23b) der Auflageflächen (15a, 15b), aufliegen, wobei die Auflageflächen (15a, 15b) absenkbar sind und das Werkstückteil (20) gegen die Wirkung des Ausdrückelements (18) stützen.

14. Verfahren nach Anspruch 12 oder 13, bei dem zur Kontrolle, ob das Werkstückteil (20) ausgedrückt wurde, ein Abreißen des Kontakts zwischen dem Ausdrückelement (18) und der Werkstückoberfläche (20a) des freigetrennten Werkstückteils (20) detektiert wird.

15. Verfahren nach Anspruch 12 oder 13, bei dem zur Kontrolle, ob das Werkstückteil (20) ausgedrückt wurde, bei einem in einer zweiten, ausgefahrenen Stellung (S2) federnd gelagerten Ausdrückelement (18) das Erreichen oder das Verlassen der zweiten Stellung (S2) detektiert wird.

16. Verfahren nach einem der Ansprüche 12 bis 15, weiter umfassend:
Absenken einer das Werkstückteil (20) stützenden Auflagefläche (15a, 15b) unter eine Auflageebene (E) des Werkstücks (2), wobei während des Absenkens das Ausdrückelement (18) an der vorgegebenen Ausdrückposition (AP) gegen das freigetrennte Werkstückteil (20) gedrückt wird, um das freigetrennte Werkstückteil (20) beim Absenken auf der Auflagefläche (15a, 15b) zu fixieren.

17. Verfahren nach Anspruch 16, bei dem das Ausdrückelement (18) zwischen einer ersten, zurückgezogenen Stellung (S1) und einer zweiten, ausgefahrenen Stellung (S2) bewegbar und in der zweiten Stellung (S2) federnd gelagert ist und beim Ausdrücken des Werkstückteils (20) aus dem Restwerkstück (2) gegen die Oberfläche des Werkstückteils (20) vorgespannt ist.

## Claims

1. A machine (1) for separative machining of a plate-shaped workpiece (2), having:
a first movement unit (7) for moving the workpiece (2) in a first direction (X);
a second movement unit (11) for moving a machining head (9) for the separative machining in a second direction (Y); and
two workpiece bearing faces (4, 5) for bearing the workpiece (2), a gap (6) that extends along the second direction (Y) being formed therebetween,
**characterized by**
a push-out unit (17) having a push-out element (18), wherein the push-out element (18) is movable at least in the second direction (Y) within the gap (6) so as to press against a workpiece part (20), which was cut free from the workpiece (2) during separative machining, at a predefined push-out position (AP), and by a control unit (16) which in the case of a cut-free workpiece part (20) in which the center of area (FS) of an area (F) that is surrounded by the external contour (21) of the cut-free workpiece part (20), or the center of mass (MS), deviates from the centroid (LS) of the external contour line (21), is configured for predefining a push-out position (AP) which coincides with the centroid of the external contour line (LS), or is offset from the center of area (FS) or from the center of mass (MS) of the cut-free workpiece part (20) in the direction toward the centroid (LS) of the contour line of said cut-free workpiece part (20).

2. The machine as claimed in claim 1, having a third movement unit (12) for moving the machining head in the first direction (X) within the gap (6), and wherein the push-out unit (17) is movable within the gap (6) by means of the second and third movement unit (11, 12).

3. The machine as claimed in claim 1 or 2, wherein the push-out unit (17) is configured for moving the push-out element (18) between a first retracted position (S1) in which the push-out element (18) does not project beyond an end of the machining head (9) that faces the workpiece (2), and a second extended position (S2) in which the push-out element (18) projects beyond the end of the machining head (9) that faces the workpiece (2).

4. The machine as claimed in claim 3, wherein the push-out element (18) in the second position (S2) is actuatable or is mounted in a resilient manner.

5. The machine as claimed in one of the preceding claims, further comprising: at least one support slide (14a, 14b) which is displaceable in the second direction (Y) within the gap (6) and which has a bearing face (15a, 15b) for supporting the workpiece (2) and workpiece parts (20) that are cut during separative machining;
wherein the support slide (14a, 14b) and/or the bearing face (15a, 15b) is/are movable relative to the support slide (14a, 14b) below a workpiece bearing plane (E) that is formed by the workpiece bearing faces (4, 5);
wherein the bearing face (15a, 15b) of the support slide (14a, 14b) has a region (23a, 23b) which forms a rigid bearing; and
wherein the support slide (14a, 14b) and the push-out element (18) are positionable relative to one another in such a manner that the push-out position (AP) is disposed in that region (23a, 23b) of the bearing face (15a, 15b) that forms the rigid bearing.

6. The machine as claimed in claim 5, wherein an extent in the first direction (X) of that region (23a, 23b) that forms the rigid bearing corresponds to the extent of a movement range (22) of the machining head (9) in the first direction (X).

7. The machine as claimed in one of claims 5 or 6, said machine having two support slides (14a, 14b) that are displaceable within the gap (6), the bearing faces (15a, 15b) of said support slides (14a, 14b) on the mutually facing edges (19a, 19b) thereof having in each case one region (23a, 23b) that forms the rigid bearing.

8. The machine as claimed in claim 7, wherein the edges (19a, 19b) of the bearing faces (15a, 15b) are aligned at an angle (αₓ) in relation to the first direction (X) and to the second direction (Y).

9. The machine as claimed in one of the preceding claims, wherein the push-out unit (17) has at least one sensor (25) for detecting the attainment of the second extended position (S2) by the push-out element (18), and/or for detecting any contact between the push-out element (18) and the surface (20a) of the cut-free workpiece part (20).

10. The machine as claimed in one of claims 5 to 9, wherein the control unit (16) for pushing-out a cut-free workpiece part (20) is further configured for positioning the push-out element (18) and the support slide or slides (14a, 14b) relative to one another in such a manner that either that region (23a, 23b) of the bearing face (15a, 15b) of a support slide (14a, 14b) that forms a rigid bearing is disposed at the push-out position (AP), or the push-out position (AP) lies between the two support slides (14a, 14b), in particular between those regions (23a, 23b) of the support slides (14a, 14b) that form a rigid bearing.

11. The machine as claimed in claim 10, wherein the control unit (16) is configured so that the predefined push-out position (AP) lies within a convex envelope (28) of partial areas (27a, 27b) of the workpiece part (20) that bear on the bearing faces (15a, 15b), in particular on those regions (23a, 23b) of the bearing faces (15a, 15b) that form a rigid bearing.

12. A method for pushing out a workpiece part (20) that has been cut free from a workpiece (2), in which the center of (FS) of the area (F) that is surrounded by an external contour (21) of the cut-free workpiece part (20), or the center of mass (MS), deviates from the centroid (LS) of the external contour line (21), on a machine (1) for separative machining of the plate-shaped workpiece (2) as claimed in one of the preceding claims, said method comprising the steps of:
moving the push-out element (18) to a predefined push-out position (AP); and
pressing the push-out element (18) against the cut-free workpiece part (20) at the predefined push-out position (AP),
**characterized in that**
a push-out position (AP) is predefined which is offset from the center of area (FS) or from the center of mass (MS) of the cut-free workpiece part (20) in the direction toward the centroid (LS) of said external contour line (21), or coincides with the centroid (LS) of the contour line (21).

13. The method as claimed in claim 12, wherein the push-out position (AP) is predefined to be within a convex envelope (28) of those partial areas (27a, 27b) of the workpiece part (20) that bear on bearing faces (15a, 15b), in particular on regions (23a, 23b) of the bearing faces (15a, 15b) that form a rigid bearing, wherein the bearing faces (15a, 15b) are lowerable and support the workpiece part (20) against the impact of the push-out element (18).

14. The method as claimed in claim 12 or 13, wherein, in order to check whether the workpiece part (20) has been pushed out, a loss of contact between the push-out element (18) and the workpiece surface (20a) of the cut-free workpiece part (20) is detected.

15. The method as claimed in claim 12 or 13, wherein, in the case of a push-out element (18) that is mounted in a resilient manner in a second extracted position (S2), the attainment of the second position (S2) or the departure therefrom is detected in order to check whether the workpiece part (20) has been pushed-out.

16. The method as claimed in claims 12 to 15, further comprising the step of:
lowering a bearing face (15a, 15b) that supports the workpiece part (20) below a bearing plane (E) of the workpiece (2)and pressing the push-out element (18) against the workpiece part (20) at the predefined push-out position (AP) during the lowering movement.

17. The method as claimed in claim 16, wherein the push-out element (18) is movable between a first retracted position (S1) and a second extended position (S2), and in the second position (S2) is mounted in a resilient manner, and when pushing-out the workpiece part (20) from the residual workpiece (2) is pretensioned against the surface of the workpiece part (20).

## Revendications

1. Machine (1) dévolue à l'usinage séparatif d'une pièce (2) en forme de plaque, comprenant :
un premier dispositif (7) de mise en mouvement, conçu pour mouvoir la pièce (2) dans une première direction (X),
un deuxième dispositif (11) de mise en mouvement conçu pour mouvoir, dans une seconde direction (Y), une tête d'usinage (9) affectée à l'usinage séparatif, ainsi que deux surfaces de support (4, 5) destinées à supporter ladite pièce (2), entre lesquelles est réservé un espace interstitiel (6) s'étendant le long de la seconde direction (Y),
**caractérisée par**
un dispositif d'expulsion (17) équipé d'un élément éjecteur (18), lequel élément éjecteur (18) peut être mû à l'intérieur dudit espace interstitiel (6), au moins dans la seconde direction (Y), de manière à exercer une pression, en un emplacement d'expulsion (AP) préétabli, contre une partie (20) de la pièce dissociée d'avec ladite pièce (2) lors de l'usinage séparatif ; ainsi que par
un dispositif de commande (16) réalisé en vue de préétablir, en présence d'une partie (20) dissociée de la pièce dans laquelle le centre de gravité (FS) d'une surface (F) entourée par le profil extérieur (21) de ladite partie (20) dissociée de la pièce, ou le barycentre de masse (MS), accuse un écart par rapport au barycentre des lignes (LS), un emplacement d'expulsion (AP) qui correspond audit barycentre des lignes (LS) ou est décalé du centre de gravité (FS) de la surface, ou du barycentre de masse (MS) de ladite partie (20) dissociée de la pièce, en direction du barycentre des lignes (LS) de ladite partie.

2. Machine selon la revendication 1, munie d'un troisième dispositif (12) de mise en mouvement conçu pour mouvoir la tête d'usinage dans la première direction (X), à l'intérieur de l'espace interstitiel (6), et dans laquelle le dispositif d'expulsion (17) peut être mû, à l'intérieur dudit espace interstitiel (6), au moyen des deuxième et troisième dispositifs (11, 12) de mise en mouvement.

3. Machine selon la revendication 1 ou 2, dans laquelle le dispositif d'expulsion (17) est réalisé de manière à mouvoir l'élément éjecteur (18) entre une première position rétractée (S1), dans laquelle ledit élément éjecteur (18) ne fait pas saillie au-delà d'une extrémité de la tête d'usinage (9) qui pointe vers la pièce (2), et une seconde position déployée (S2) dans laquelle ledit élément éjecteur (18) fait saillie au-delà de ladite extrémité de ladite tête d'usinage (9) qui pointe vers ladite pièce (2).

4. Machine selon la revendication 3, dans laquelle l'élément éjecteur (18) est ajustable, ou monté élastiquement dans la seconde position (S2).

5. Machine selon l'une des revendications précédentes, comprenant en outre :
au moins un chariot de soutien (14a, 14b) qui peut être déplacé dans la seconde direction (Y), à l'intérieur de l'espace interstitiel (6), et est doté d'une surface de support (15a, 15b) conçue pour soutenir la pièce (2) et des parties (20) de ladite pièce sectionnées lors de l'usinage séparatif,
avec faculté d'abaissement du chariot de soutien (14a, 14b), et/ou de la surface de support (15a, 15b) vis-à-vis dudit chariot de soutien (14a, 14b), au-dessous d'un plan (E) de support de pièce, formé par les surfaces (4, 5) de support de ladite pièce,
sachant que ladite surface de support (15a, 15b) du chariot de soutien (14a, 14b) présente une région (23a, 23b) qui forme un support rigide,
et sachant que ledit chariot de soutien (14a, 14b) et l'élément éjecteur (18) peuvent être positionnés, l'un par rapport à l'autre, de façon telle que l'emplacement d'expulsion (AP) soit situé dans ladite région (23a, 23b) de la surface de support (15a, 15b) qui forme le support rigide.

6. Machine selon la revendication 5, dans laquelle une étendue de la région (23a, 23b) formant le support rigide correspond, dans la première direction (X), à l'étendue d'une zone de mouvement (22) de la tête d'usinage (9) dans ladite première direction (X).

7. Machine selon l'une des revendications 5 ou 6, comptant deux chariots de soutien (14a, 14b) qui peuvent être déplacés à l'intérieur de l'espace interstitiel (6) et dont les surfaces de support (15a, 15b) sont respectivement pourvues, au niveau de leurs arêtes (19a, 19b) pointant l'une vers l'autre, d'une région (23a, 23b) formant le support rigide.

8. Machine selon la revendication 7, dans laquelle les arêtes (19a, 19b) des surfaces de support (15a, 15b) sont orientées suivant un angle (αₓ) par rapport à la première direction (X) et par rapport à la seconde direction (Y).

9. Machine selon l'une des revendications précédentes, dans laquelle le dispositif d'expulsion (17) est équipé d'au moins un capteur (25) conçu pour détecter que l'élément éjecteur (18) atteint la seconde position déployée (S2), et/ou pour détecter un contact dudit élément éjecteur (18) avec la surface (20a) de la partie (20) dissociée d'avec la pièce.

10. Machine selon l'une des revendications 5 à 9, le dispositif de commande (16) étant réalisé, par ailleurs, pour positionner mutuellement l'élément éjecteur (18) et le ou les chariot(s) de soutien (14a, 14b), en vue de l'expulsion d'une partie (20) dissociée d'avec la pièce, de façon telle que la région (23a, 23b) de la surface de support (15a, 15b) d'un chariot de soutien (14a, 14b), formant un support rigide, soit située à l'emplacement d'expulsion (AP) ou que ledit emplacement d'expulsion (AP) soit interposé entre les deux chariots de soutien (14a, 14b), en particulier entre les régions (23a, 23b) desdits chariots de soutien (14a, 14b) qui forment un support rigide.

11. Machine selon la revendication 10, dans laquelle le dispositif de commande (16) est réalisé de façon telle que l'emplacement d'expulsion (AP) préétabli soit situé à l'intérieur d'une enveloppe convexe (28) de surfaces partielles (27a, 27b) de la partie (20) de la pièce qui reposent sur les surfaces de support (15a, 15b), notamment sur les régions (23a, 23b) desdites surfaces de support (15a, 15b) formant un support rigide.

12. Procédé d'expulsion d'une partie (20) dissociée d'avec une pièce (2), dans lequel le centre de gravité (FS) de la surface (F) entourée par le profil extérieur (21) de ladite partie (20) dissociée de la pièce, ou le barycentre de masse (MS), accuse un écart par rapport au barycentre des lignes (LS), sur une machine (1) conforme à l'une des revendications précédentes et dévolue à l'usinage séparatif de ladite pièce (2) en forme de plaque, consistant à :
mouvoir l'élément éjecteur (18) vers un emplacement d'expulsion (AP) préétabli, ainsi qu'à
presser ledit élément éjecteur (18) contre la partie (20) dissociée de la pièce, audit emplacement d'expulsion (AP) préétabli,
**caractérisé par**
l'établissement préalable, dans la partie (20) dissociée de la pièce, d'un emplacement d'expulsion (AP) qui est décalé du centre de gravité (FS) de la surface ou du barycentre de masse (MS) de ladite partie (20) dissociée de la pièce, en direction du barycentre des lignes (LS) de ladite partie, ou qui coïncide avec ledit barycentre des lignes (LS).

13. Procédé selon la revendication 12, dans lequel l'emplacement d'expulsion (AP) est préétabli à l'intérieur d'une enveloppe convexe (28) des surfaces partielles (27a, 27b) de la partie (20) de la pièce qui reposent sur des surfaces de support (15a, 15b), notamment sur des régions (23a, 23b) desdites surfaces de support (15a, 15b) formant un support rigide, sachant que lesdites surfaces de support (15a, 15b) peuvent être abaissées et soutiennent ladite partie (20) de la pièce en contrecarrant l'action de l'élément éjecteur (18).

14. Procédé selon la revendication 12 ou 13, dans lequel une rupture du contact, entre l'élément éjecteur (18) et la surface (20a) de la partie (20) dissociée de la pièce, est détectée en vue de contrôler si ladite partie (20) de la pièce a été expulsée.

15. Procédé selon la revendication 12 ou 13, dans lequel, en vue de contrôler si la partie (20) de la pièce a été expulsée, il est détecté qu'un élément éjecteur (18), monté élastiquement dans une seconde position déployée (S2), atteint ou quitte ladite seconde position (S2).

16. Procédé selon l'une des revendications 12 à 15, consistant par ailleurs à :
abaisser, au-dessous d'un plan (E) de support de la pièce (2), une surface de support (15a, 15b) soutenant la partie (20) de ladite pièce, sachant que l'élément éjecteur (18) est pressé contre la partie (20) dissociée de la pièce à l'emplacement d'expulsion (AP) préétabli, au cours de l'abaissement, de telle sorte que ladite partie (20) dissociée de la pièce soit bloquée à demeure sur ladite surface de support (15a, 15b) lors de l'abaissement.

17. Procédé selon la revendication 16, dans lequel l'élément éjecteur (18) peut être mû entre une première position rétractée (S1) et une seconde position déployée (S2), est monté élastiquement dans ladite seconde position (S2), et est précontraint contre la surface (20a) de la partie (20) dissociée d'avec la pièce lorsque ladite partie (20), dissociée de la pièce, est expulsée de la partie restante de ladite pièce (2).
